# EUROPEAN PATENT APPLICATION

(11) **EP 3 753 409 A1**
(43) Date of publication of application: **23.12.2020**
(21) Application number: 19180888.0
(22) Date of filing: 18.06.2019
(51) Int. Cl.: A01N 47/28, A01N 25/04, A01P 1/00, A01P 3/00

(54) **USE OF UREA AS AN ANTIMICROBIAL ADDITIVE IN AN AQUEOUS SUSPENSION**

(71) Applicant: Omya International AG, 4665 Oftringen (CH)
(72) Inventor: ZOCCO, Domenico, 8048 Zürich (CH); GLAUBITZ, Joachim, 6264 Pfaffnau (CH); URWYLER, Simon, 3012 Bern (CH)
(74) Representative: Glas, Holger

(57) **Abstract**

Use of urea as an antimicrobial additive in an aqueous suspension, comprising from 5 to 85 wt.-%, based on the total weight of the suspension, of at least one calcium carbonate-comprising material and having a pH of between 7.0 and 14, a process for preserving an aqueous suspension against microbial growth, an aqueous preparation obtainable by the inventive process as well as the use of the aqueous preparation in agriculture.

## Description

The present invention refers to the use of urea as an antimicrobial additive in an aqueous suspension, comprising from 5 to 85 wt.-%, based on the total weight of the suspension, of at least one calcium carbonate-comprising material and having a pH of between 7.0 and 14, a process for preserving an aqueous suspension against microbial growth, an aqueous preparation obtainable by the inventive process as well as the use of the aqueous preparation in agriculture.

Aqueous suspensions, dispersions or slurries of calcium carbonate-comprising material are used extensively in agriculture industries, for example as soil conditioner to increase the pH of the soil in order to create optimum soil conditions for crop growth. They are also used as fertilizer to provide a source of calcium ions which are important for plant nutrient. Furthermore, they are used to improve the texture of the soil, for example by breaking down clay structures. Another field of application is the use in sunburn protection. Leaves and fruits of agricultural crops can be sprayed with suspensions of calcium carbonate-comprising materials to create a film that provides some protection from the damaging effects of sunlight. Furthermore, these suspensions might be used as animal feed supplements.

Typical aqueous preparations of calcium carbonate-comprising materials are characterized in that they comprise water, calcium carbonate-comprising materials as water-insoluble solid compounds and optionally further additives, such as dispersing agents, in the form of a suspension, a slurry or dispersion with a water-insoluble solid content of 0.1 to 99.0 wt.-% based on the total weight of the preparation. Water-soluble polymers and copolymers which may be used as e.g. dispersant and/or grinding aid in such preparation are, for example, described in US 5,278,248.

In US 7,695,541 a non-acidic, aqueous fertilizer suspension having a pH equal to or greater than 7 is described that comprises calcium carbonate as water-insoluble salt.

US 4,994,284 refers to an alkaline aqueous suspension for use as an animal feed supplement, the suspension comprising among others water and limestone.

In US 6,027,740 a method for protecting surfaces from arthropod infestation is disclosed which comprises applying to the surfaces of agricultural products like fruits vegetables, trees or grasses an effective amount of a slurry comprising water and a particulate material such as calcium carbonate, wherein the particulate materials are finely divided.

However, the aforementioned aqueous preparations are often subject to contamination by microorganisms such as fungi, yeasts, protozoa and/or aerobic and anaerobic bacteria. Such contamination by microorganisms is, depending on the species, a risk to humans, animals and/or crops. For example, depending on the microorganism species, the quality of the soil may be reduced. Furthermore, if the aqueous preparation containing such microorganisms is brought in contact with plants the growth of the plants can be decreased. Additionally, such microorganism may be harmful to humans or animals if they are applied to crops or vegetables that are intended for consumption. Contamination by microorganisms may also result in changes in the preparation properties of these aqueous preparations such as changes in viscosity and/or pH, discolorations or reductions in other quality parameters, for example shelf life, which negatively affect their commercial value.

Therefore, such suspensions or slurries are often heat sterilized in order to prevent the formation of such microorganisms. However, there is always the risk of an insufficient sterilisation and, therefore, this method is normally limited to small volumes. Furthermore, heat sterilisation requires a special equipment and is a very time and energy consuming method.

Therefore, the manufacturers of such aqueous preparations usually take measures for stabilising and preserving the suspensions, dispersions or slurries by using antimicrobial agents.

For ensuring an acceptable microbiological quality of aqueous preparations, preservatives or biocides are typically used over the entire life cycle of the preparation (production, storage, transport, use). In the art, several approaches for improving the microbiological quality of aqueous preparations have been proposed. For example, EP 1 139 741 describes aqueous suspensions or dispersions of minerals, fillers and/or pigments, containing a microbiocidal agent in the form of a solution and derivatives of phenol in partially neutralized form. US 2006/0111410 mentions a mixture comprising 1,2-benzisothiazolinone (BIT) and tetramethylol-acetylenediurea (TMAD) for protecting industrial materials and products such as compositions comprising calcium carbonate against attack and destruction by microorganisms. EP 2 199 348 A1 relates to a process for manufacturing aqueous mineral material suspensions comprising for example calcium carbonate using at least one lithium ion neutralised water-soluble organic polymer as well as the use of the lithium ion neutralised water-soluble organic polymer in the manufacturing process as a dispersing and/or grinding enhancer. EP 2 374 353 A1 refers to a process for preserving an aqueous preparation of mineral material like e.g. calcium carbonate preparations. Furthermore, the applicant is aware of EP 2 108 260 A2 referring to a process for bacterial stabilising aqueous preparations like e.g. calcium carbonate slurries by aldehyde-releasing and/or aldehyde-based biocides and a composition which can be used for the biocidal treatment of such aqueous preparations.

However, such antimicrobial agents may have risks for the environment and human or animal health in the quantities used. Furthermore, the use of antimicrobial agents in aqueous preparations is subject to continuously increasing limitations especially regarding the antimicrobial agent concentrations. Furthermore, the addition of biocides to such slurries or suspensions requires high safety standards. Biocides fall under specific governmental regulations due to their toxicity and, therefore, the handling as well as the sale of compositions comprising such biocides is subject to strict regulations. Furthermore, some biocides are relatively expensive and, therefore, the price of the preserved compositions increases. Finally, many farmer or consumers reject to use fertilizers that comprise biocides/antimicrobials or to buy and eat crops and vegetables that have been come in contact with biocides.

Therefore, there is still a need in the art for stabilising aqueous preparations such as suspensions, dispersions and slurries against microbial growth without using known biocides or antimicrobial agents.

Thus, it is an objective of the present invention to provide suspensions or slurries that comprise calcium carbonate-comprising materials that have been stabilized against microbial growth especially growth of bacteria and/or yeast and/or mould. In particular, it is an objective of the present invention to provide suspensions or slurries that comprise calcium carbonate-comprising materials that have been stabilized against microbial growth without the use of known and maybe toxic/harmful biocides/antimicrobial agents. It is a further object of the present invention that the preparation of these compositions is time and energy saving and, therefore, these compositions have not been subjected to a heating step in order to avoid the microbial growth. It is a further object of the present invention that the aqueous suspensions or slurries can be stored for a certain period of time without growth of bacteria and/or yeast and/or mould. A further object of the present invention is to provide aqueous suspensions or slurries comprising calcium carbonate-comprising material that have additional advantages and/or properties.

These and other objectives of the present invention can be solved by the use of urea as an antimicrobial additive in aqueous suspensions comprising calcium carbonate-comprising material, by the process and the aqueous preparations as described in the present invention and defined in the claims.

According to one aspect of the present invention the use of urea as an antimicrobial additive in an aqueous suspension, comprising from 5 to 85 wt.-%, based on the total weight of the suspension, of at least one calcium carbonate-comprising material and having a pH of between 7.0 and 14 is disclosed, wherein the antimicrobial additive is present in the suspension in an amount of at least 1.2 wt.-%, based on the total weight of the aqueous suspension and wherein the weight ratio of urea : water in the aqueous suspension is from 1:100 to 50:100.

The inventors surprisingly found that by the use of urea as antimicrobial additive according to claim 1 it is possible to preserve an aqueous suspension comprising a calcium carbonate-comprising material against microbial growth, especially against the growth of bacteria and/or yeast and/or mould. By using urea as antimicrobial additive according to claim 1 the aqueous suspension or slurries have not to be subjected to a heating step in order to avoid the microbial growth and, therefore, by using urea as antimicrobial additive slurries can be provided without a time or energy-consuming heating step.

Urea also known as carbamide is an organic compound with the chemical formula CO(NH₂)₂. The molecule has two -NH₂ groups joined by a carbonyl (C=O) functional group. Urea serves an important role in the metabolism of nitrogen-containing compounds by animals, and is the main nitrogen-containing substance in the urine of mammals. The body uses it in many processes, most notably nitrogen excretion. Therefore, it is a naturally occurring substance that is formed in the body of humans and animals, more precisely, the liver forms it by combining two ammonia molecules (NH₃) with a carbon dioxide (CO₂) molecule in the urea cycle. Urea is a colorless, odorless solid, highly soluble in water, and has a low toxicity (LD₅₀ is 15 g/kg for rats). Dissolved in water, it is neither acidic nor alkaline. Therefore, urea is safe and non-toxic for the environment and human health. Urea is known as fertilizer in agriculture and is naturally formed, for example in the body of humans and animals. Thus it is considered as a safe chemical. Furthermore, urea is approved as stabilisator under the number E927b for food and cosmetics in the EU. Therefore, by the use of urea as antimicrobial additive according to claim 1 it is possible to provide suspensions/slurries that are preserved against microbial growth and further are not toxic or hazardous for humans and animals. Furthermore, since urea is not toxic the use of urea does not require as high safety standards as for biocides.

Furthermore, urea comprises nitrogen and, therefore, can be used in fertilizers as a source of nitrogen. Thus, when using urea as antimicrobial additive according to claim 1 in an aqueous suspension, comprising at least one calcium carbonate-comprising material the aqueous suspensions are not only preserved against the growth or formation of bacteria and/or yeast and/or mould but these aqueous compositions may also be used as nitrogen fertilizers in agriculture.

According to another aspect of the invention a process for preserving an aqueous suspension against microbial growth is provided, the process comprising the steps of:
a) providing at least one calcium carbonate-comprising material,
b) providing urea as antimicrobial additive,
c) contacting the at least one calcium carbonate-comprising material of step a) with the at least one antimicrobial additive of step b) to provide an aqueous suspension,
wherein the aqueous suspension comprises from from 5 to 85 wt.-%, based on the total weight of the suspension, of at least one calcium carbonate-comprising material and has a pH of between 7.0 and 14, and
wherein the aqueous suspension comprises the antimicrobial additive in an amount of at least 1.2 wt.-% based on the total weight of the suspension and wherein the weight ratio of urea : water in the aqueous suspension is from 1:100 to 50:100.

According to another aspect of the invention an aqueous preparation obtainable by the process according to the present invention is provided.

According to another aspect of the invention the use of the aqueous preparation of the present invention in agriculture as a plant booster and/or a mineral fertilizer for stimulation of a photosynthetic process in plants, stimulation of plant growth, reinforcement of resistance to plant diseases, improvement of nutrient absorption and plant nutrition is provided.

Advantageous embodiments of the present invention are defined in the corresponding sub-claims.

According to one embodiment of the present invention the antimicrobial additive is added as a water based solution to the aqueous suspension comprising the calcium carbonate-comprising material, preferably in the form of a water based solution comprising from 20 to 75 wt.-%, more preferably from 30 to 72 wt.-%, even more preferably from 40 to 65 wt.-% and most preferably from 50 to 60 wt.-% of urea, based on the total weight of the water based solution.

According to another embodiment of the present invention the antimicrobial additive is added as a dry material to the aqueous suspension comprising the calcium carbonate-comprising material.

According to another embodiment of the present invention the antimicrobial additive is added to the suspension in an amount of 1.2 to 20 wt.-%, preferably in an amount of 1.5 to 15 wt.-%, more preferably in an amount of 2.0 to 10 wt.-%, and most preferably in an amount of 2.5 to 8.5 wt.-%, based on the total weight of the suspension.

According to another embodiment of the present invention the calcium carbonate-comprising material comprises at least 50 wt.-%, preferably at least 80 wt.-%, and more preferably at least 97 wt.-% of calcium carbonate relative to the total weight of said calcium carbonate-comprising material.

According to another embodiment of the present invention the aqueous suspension comprises from 10 to 84 wt.-%, preferably from 30 to 83 wt.-%, more preferably from 50 to 82 wt.-%, even more preferably from 60 to 80 wt.-% and most preferably from 68 to 78 wt.-%, based on the total dry weight of the suspension, of at least one calcium carbonate-comprising material.

According to another embodiment of the present invention the calcium carbonate-comprising material is selected from the group consisting of ground calcium carbonate, preferably marble, limestone, dolomite and/or chalk, precipitated calcium carbonate, preferably vaterite, calcite and/or aragonite and surface-reacted calcium carbonate, wherein the surface-reacted calcium carbonate is a reaction product of natural ground or precipitated calcium carbonate with carbon dioxide and one or more H₃O⁺ ion donors in an aqueous medium, wherein the carbon dioxide is formed in situ by the H₃O⁺ ion donor treatment and/or is supplied from an external source and mixtures thereof, more preferably the at least one calcium carbonate-comprising material is ground calcium carbonate.

According to another embodiment of the present invention the antimicrobial agent prevents or reduces the occurrence of at least one strain of bacteria and/or at least one strain of yeast and/or at least one strain of mould when present in the aqueous suspension.

According to another embodiment of the present invention (i) the at least one strain of bacteria is selected from the group comprising *Methylobacterium sp., Salmonella sp., Escherichia sp.* such as *Escherichia coli, Shigella sp., Enterobacter sp., Pseudomonas sp.* such as *Pseudomonas mendocina, Pseudomonas stutzeri, Pseudomonas aeruginosa,* and/or *Pseudomonas putida, Burkholderia sp.* such as *Burkholderia cepacia, Bdellovibrio sp., Agrobacterium sp., Alcaligenes sp.* such as *Alcaligenes faecalis, Flavobacterium sp., Ochrobactrum sp. such as Ochrobactrum tritici, Kocuria sp.* such as *Kocuria rhizophila, Rhizobium sp.* such as *Rhizobium radiobacter, Sphingobacterium sp., Sphingomonas sp., Aeromonas sp., Chromobacterium sp., Vibrio sp., Hyphomicrobium sp., Leptothrix sp., Micrococcus sp., Staphylococcus sp.* such as *Staphylococcus aureus, Agromyces sp., Acidovorax sp., Comamonas sp.* such as *Comomonas aquatic, Brevundimonas sp.* such as *Brevundimonas intermedia* and *Brevundimonas diminiuta, Spingobium sp.* such as *Spingobium yanoikuyae, Thauera sp.* such as *Thauera mechernichensis, Caldimonas sp., Hdrogenophaga sp., Teipidomonas sp.,* and mixtures thereof, and mixtures thereof, and/or (ii) the at least one strain of yeast is selected from the group comprising *Saccharomycotina, Taphrinomycotina, Schizosaccharomycetes, Basidiomycota, Agaricomycotina, Tremellomycetes, Pucciniomycotina, Microbotryomycetes, Candida sp.* such as *Candida albicans, Candida tropicalis, Candida stellatoidea, Candida glabrata, Candida krusei, Candida guilliermondii, Candida viswanathii, Candida lusitaniae* and mixtures thereof, *Yarrowia sp.* such as *Yarrowia lipolytica, Cryptococcus* sp. such as *Cryptococcus gattii* and *Cryptococcus neofarmans, Zygosaccharomyces sp., Rhodotorula sp.* such as *Rhodotorula mucilaginosa, Saccharomyces sp.* such as *Saccharomyces cerevisiae, Pichia sp.* such as *Pichia membranifaciens* and mixtures thereof, and/or (iii) the at least one strain of mould is selected from the group comprising of *Acremonium sp., Alternaria sp., Aspergillus sp., Cladosporium sp., Fusarium sp., Mucor sp., Penicillium sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

According to another embodiment of the present invention the pH of the aqueous suspension is between 7.5 and 12, preferably between 8.2 and 10.0 and most preferably between 8.5 and 9.5.

According to another embodiment of the present invention no further antimicrobial additives apart from urea are added to the aqueous suspension.

According to another embodiment of the present invention the weight ratio of urea : water in the aqueous suspension is from 5:100 to 40:100 and preferably from 9:100 to 30:100.

According to another embodiment of the present invention in the inventive process the calcium carbonate-comprising material is selected from the group consisting of ground calcium carbonate, preferably marble, limestone, dolomite and/or chalk, precipitated calcium carbonate, preferably vaterite, calcite and/or aragonite and surface-reacted calcium carbonate, wherein the surface-reacted calcium carbonate is a reaction product of natural ground or precipitated calcium carbonate with carbon dioxide and one or more H₃O⁺ ion donors in an aqueous medium, wherein the carbon dioxide is formed in situ by the H₃O⁺ ion donor treatment and/or is supplied from an external source and mixtures thereof, more preferably the at least one calcium carbonate-comprising material is surface-reacted calcium carbonate.

It should be understood that for the purposes of the present invention, the following terms have the following meanings:
A "calcium carbonate-comprising material" in the meaning of the present invention refers to a material which is a source of calcium carbonate and preferably is selected from ground calcium carbonate, precipitated calcium carbonate, surface-reacted calcium carbonate, dolomite and mixtures thereof.

"Ground calcium carbonate" (GCC) in the meaning of the present invention is a calcium carbonate obtained from natural sources, such as limestone, marble, or chalk, and processed through a wet and/or dry treatment such as grinding, screening and/or fractionation, for example, by a cyclone or classifier.

"Precipitated calcium carbonate" (PCC) in the meaning of the present invention is a synthesized material, generally obtained by precipitation following a reaction of carbon dioxide and calcium hydroxide (hydrated lime) in an aqueous environment or by precipitation of a calcium- and a carbonate source in water. Additionally, precipitated calcium carbonate can also be the product of introducing calcium- and carbonate salts, calcium chloride and sodium carbonate for example, in an aqueous environment. PCC may have a vateritic, calcitic or aragonitic crystalline form. PCCs are described, for example, in EP 2 447 213 A1, EP 2 524 898 A1, EP 2 371 766 A1, EP 2 840 065 A1, or WO 2013/142473 A1.

A "surface-reacted calcium carbonate" according to the present invention is a reaction product of natural ground calcium carbonate or precipitated calcium carbonate with carbon dioxide and one or more H₃O⁺ ion donors, wherein the carbon dioxide is formed in situ by the H₃O⁺ ion donors treatment and/or is supplied from an external source. A H₃O⁺ ion donor in the context of the present invention is a Bronsted acid and/or an acid salt.

The term "dry" or "dried" material is understood to be a material having between 0.001 to 20 wt.-% of water, based on the total weight of the surface-treated calcium carbonate-comprising material weight. The % water (equal to "moisture content") is determined gravimetrically as the weight loss upon heating to 150°C. "Drying" in the sense of the present invention means that heating is carried out until the moisture content of the surface-treated calcium carbonate-comprising material is in the range from 0.001 to 20 % by weight, based on the total weight of the surface-treated calcium carbonate-comprising material weight.

The "particle size" of particulate materials other than surface-reacted calcium carbonate-comprising mineral material herein is described by its distribution of particle sizes *dₓ*. Therein, the value *dₓ* represents the diameter relative to which *x* % by weight of the particles have diameters less than *dₓ*. This means that, for example, the *d*₂₀ value is the particle size at which 20 wt.-% of all particles are smaller than that particle size. The *d*₅₀ value is thus the weight median particle size, i.e. 50 wt.-% of all grains are bigger and the remaining 50 wt.-% are smaller than this particle size. For the purpose of the present invention the particle size is specified as weight median particle size *d*₅₀ unless indicated otherwise. The *d*₉₈ value is the particle size at which 98 wt.-% of all particles are smaller than that particle size. Particle sizes were determined by using a SedigraphTM 5100 or 5120 instrument of Micromeritics Instrument Corporation. The method and the instrument are known to the skilled person and are commonly used to determine the particle size of fillers and pigments. The measurements were carried out in an aqueous solution of 0.1 wt.-% Na₄P₂O₇. The samples were dispersed using a high speed stirrer and sonicated.

The "particle size" of surface-reacted calcium carbonate-comprising mineral material herein is described as volume-based particle size distribution. Therein, the value *dₓ* represents the diameter relative to which *x* % by volume of the particles have diameters less than *dₓ*. This means that, for example, the *d*₂₀ value is the particle size at which 20 vol.-% of all particles are smaller than that particle size. The *d*₅₀ value is thus the volume median particle size, i.e. 50 vol.-% of all particles are smaller than that particle size and the *d*₉₈ value is the particle size at which 98 vol.-% of all particles are smaller than that particle size. For determining the volume-based particle size distribution, e.g., the volume-based median particle diameter (*d*₅₀) or the volume-based top cut particle size (*d*₉₈) of the surface-reacted calcium carbonate-comprising mineral material, a Malvern Mastersizer 2000 Laser Diffraction System was used. The raw data obtained by the measurement are analysed using the Mie theory, with a defined RI (particle refractive index) of 1.57 and iRI (absorption index) of 0.005 and Malvern Application Software 5.60. The measurement was performed with an aqueous dispersion. For this purpose, the samples were dispersed using a high-speed stirrer. Alternatively, the "particle size" may be defined by the weight median diameter.

A "specific surface area (SSA)" of a calcium carbonate-comprising material in the meaning of the present invention is defined as the surface area of the calcium carbonate-comprising material divided by its mass. As used herein, the specific surface area is measured by nitrogen gas adsorption using the BET isotherm (ISO 9277:2010) and is specified in m²/g.

The term "surface area" or "outer surface" in the meaning of the present invention refers to the surface of the calcium carbonate-comprising material particle that is accessible for nitrogen as used for measuring the BET according to ISO 9277:2010. In this regard, it should be noted that the amount of surface-treatment agent according to claim 1 required for full saturation of the surface area is defined as a monolayer concentration. Higher concentrations thus can be chosen by forming bilayered or multi-layered structures on the surface of the calcium carbonate-comprising material particle.

For the purpose of the present invention, the term "viscosity" or "Brookfield viscosity" refers to Brookfield viscosity. The Brookfield viscosity is for this purpose measured by a Brookfield DV-III Ultra viscometer at 24°C ± 3°C at 100 rpm using an appropriate spindle of the Brookfield RV-spindle set and is specified in mPa·s. Once the spindle has been inserted into the sample, the measurement is started with a constant rotating speed of 100 rpm. The reported Brookfield viscosity values are the values displayed 60 s after the start of the measurement. Based on his technical knowledge, the skilled person will select a spindle from the Brookfield RV-spindle set which is suitable for the viscosity range to be measured. For example, for a viscosity range between 200 and 800 mPa·s the spindle number 3 may be used, for a viscosity range between 400 and 1 600 mPa·s the spindle number 4 may be used, for a viscosity range between 800 and 3 200 mPa·s the spindle number 5 may be used, for a viscosity range between 1 000 and 2 000 000 mPa·s the spindle number 6 may be used, and for a viscosity range between 4 000 and 8 000 000 mPa·s the spindle number 7 may be used.

For the purpose of the present application, "water-insoluble" materials are defined as materials which, when 100 g of said material is mixed with 100 g deionised water and filtered on a filter having a 0.2 µm pore size at 20°C to recover the liquid filtrate, provide less than or equal to 0.1 g of recovered solid material following evaporation at 95 to 100°C of 100 g of said liquid filtrate at ambient pressure. "Water-soluble" materials are defined as materials which, when 100 g of said material is mixed with 100 g deionised water and filtered on a filter having a 0.2 µm pore size at 20°C to recover the liquid filtrate, provide more than 0.1 g of recovered solid material following evaporation at 95 to 100°C of 100 g of said liquid filtrate at ambient pressure.

A "suspension" or "slurry" in the meaning of the present invention comprises insoluble solids and a solvent or liquid, preferably water, and optionally further additives, and usually contains large amounts of solids and, thus, is more viscous and can be of higher density than the liquid from which it is formed.

The term "base" according to the present invention refers to a base as defined by the Bronsted-Lowry theory. Therefore, a base in the meaning of the present invention is a substance that can accept hydrogen ions (H⁺)-otherwise known as protons.

The rem "urea" or "carbamide" according to the present invention refers to an organic compound with the chemical formula CO(NH₂)₂ as well as hydrates thereof and salts thereof.

According to the present invention, the wording "preserving an aqueous suspension against microbial growth" means that an antimicrobial activity is induced or prolonged or increased or effected by urea such that a microbial growth is prevented or reduced.

In the meaning of the present invention, antimicrobial agents are agents which have the ability to stabilise the aqueous preparation, i.e. to prevent or reduce microbial growth of at least one strain of bacteria and/or at least one strain of yeast and/or at least one strain of mould, when dosed in usual amounts (e.g. as proposed by the supplier of the antimicrobial agent).

According to the present invention, the wording "prevents microbial growth" means that no significant growth of at least one strain of bacteria and/or at least one strain of yeast and/or at least one strain of mould is observed in the aqueous preparation when the antimicrobial agent is present. According to the present invention, the wording "reduce microbial growth" means that growth of at least one strain of bacteria and/or at least one strain of yeast and/or at least one strain of mould is slower in the aqueous preparation when the antimicrobial agent is present.

According to the present invention, a "significant growth or accumulation" of the at least one strain of bacteria and/or at least one strain of yeast and/or at least one strain of mould is observed if the difference after 24 h, i.e. the growth of the of the at least one strain of bacteria and/or at least one strain of yeast and/or at least one strain of mould, is greater than the error associated with the measurement technique and measured by plate-out on a tryptic soy agar (TSA), where the plates are incubated at 30°C and evaluated after 48 hours, according to the bacterial count method described in the Example section herein.

The term "solid" according to the present invention refers to a material that is solid under standard ambient temperature and pressure (SATP) which refers to a temperature of 298.15 K (25°C) and an absolute pressure of exactly 100 000 Pa (1 bar, 14.5 psi, 0.98692 atm).

The term "ambient pressure" according to the present invention refers to the standard ambient temperature pressure (SATP) which refers to an absolute pressure of exactly 100 000 Pa (1 bar, 14.5 psi, 0.98692 atm). The term "reduced pressure" refers to a pressure below the "ambient pressure".

Where the term "comprising" is used in the present description and claims, it does not exclude other non-specified elements of major or minor functional importance. For the purposes of the present invention, the term "consisting of' is considered to be a preferred embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

When in the following reference is made to preferred embodiments or technical details of the inventive use of urea as an antimicrobial additive in an aqueous suspension, it is to be understood that these preferred embodiments or technical details also refer to the inventive process, to the inventive aqueous preparation and the inventive use of the aqueous preparation as defined herein, as well as to the inventive method (as far as applicable).

### Use of urea as antimicrobial additive

As set out above the present invention refers to the use of urea as an antimicrobial additive in an aqueous suspension, comprising from 5 to 85 wt.-%, based on the total weight of the suspension, of at least one calcium carbonate-comprising material and having a pH of between 7.0 and 14 is disclosed, wherein the antimicrobial additive is present in the suspension in an amount of at least 1.2 wt.-%, based on the total weight of the aqueous suspension and wherein the weight ratio of urea : water in the aqueous suspension is from 1:100 to 50:100.

The following information regarding the aqueous suspension, comprising from 5 to 85 wt.-%, based on the total weight of the suspension, of at least one calcium carbonate-comprising material and having a pH of between 7.0 and 14, relate both to suspensions with and without urea.

According to the present invention, the aqueous suspension comprises from 5 to 85 wt.-%, based on the total weight of the suspension, of at least one calcium carbonate-comprising material.

The expression "at least one" calcium carbonate-comprising material means that one or more, for example, two or three calcium carbonate-comprising materials may be present in the aqueous suspension. According to a preferred embodiment, only one calcium carbonate-comprising material is present in the aqueous suspension.

According to one embodiment of the present invention the at least one calcium carbonate-comprising material comprises at least 50 wt.-%, preferably at least 80 wt.-%, and more preferably at least 97 wt.-% of calcium carbonate relative to the total dry weight of said calcium carbonate-comprising material. According to another embodiment the at least one calcium carbonate-comprising material consists of calcium carbonate. According to a preferred embodiment the at least one calcium carbonate-comprising material consists of calcium carbonate.

The at least one calcium carbonate-comprising material is preferably in the form of a particulate material. According to one embodiment of the present invention that the at least one calcium carbonate-comprising material has a weight median particle size *d*₅₀ value in the range from 0.1 to 7 µm. For example, the at least one calcium carbonate-comprising material has a weight median particle size *d*₅₀ from 0.25 µm to 5 µm and preferably from 0.6 µm to 4 µm.

According to one embodiment of the present invention the at least one calcium carbonate-comprising material may have a top cut (*d*₉₈) of ≤ 15 µm. For example, the at least one calcium carbonate-comprising material may have a top cut (*d*₉₈) of ≤ 12.5 µm, preferably of ≤ 10 µm and most preferably of ≤ 7.5 µm.

According to another embodiment of the present invention the specific surface area of the calcium carbonate-comprising material measured by BET nitrogen method according to ISO 9277:2010 is in the range from 1 to 250 m²/g, preferably in the range from 2 to 200 m²/g and most preferably in the range from 3 to 150 m²/g.

According to a preferred embodiment of the present invention the at least one calcium carbonate-comprising material is selected from the group consisting of ground calcium carbonate, preferably marble, limestone, dolomite and/or chalk, precipitated calcium carbonate, preferably vaterite, calcite and/or aragonite and surface-reacted calcium carbonate, wherein the surface-reacted calcium carbonate is a reaction product of natural ground or precipitated calcium carbonate with carbon dioxide and one or more H₃O⁺ ion donors in an aqueous medium, wherein the carbon dioxide is formed in situ by the H₃O⁺ ion donor treatment and/or is supplied from an external source and mixtures thereof.

Natural or ground calcium carbonate (GCC) is understood to be manufactured from a naturally occurring form of calcium carbonate, mined from sedimentary rocks such as limestone or chalk, or from metamorphic marble rocks, eggshells or seashells. Calcium carbonate is known to exist as three types of crystal polymorphs: calcite, aragonite and vaterite. Calcite, the most common crystal polymorph, is considered to be the most stable crystal form of calcium carbonate. Less common is aragonite, which has a discrete or clustered needle orthorhombic crystal structure. Vaterite is the rarest calcium carbonate polymorph and is generally unstable. Ground calcium carbonate is almost exclusively of the calcitic polymorph, which is said to be trigonal-rhombohedral and represents the most stable form of the calcium carbonate polymorphs. The term "source" of the calcium carbonate in the meaning of the present application refers to the naturally occurring mineral material from which the calcium carbonate is obtained. The source of the calcium carbonate may comprise further naturally occurring components such as magnesium carbonate, alumino silicate etc.

In general, the grinding of natural ground calcium carbonate may be a dry or wet grinding step and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate comprising mineral material comprises a wet ground calcium carbonate comprising mineral material, the grinding step may be performed under conditions such that autogenous grinding takes place and/or by horizontal ball milling, and/or other such processes known to the skilled man. The wet processed ground calcium carbonate comprising mineral material thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

According to one embodiment of the present invention, the source of natural or ground calcium carbonate (GCC) is selected from marble, chalk, limestone, or mixtures thereof. Preferably, the source of ground calcium carbonate is marble, and more preferably dolomitic marble and/or magnesitic marble. According to one embodiment of the present invention, the GCC is obtained by dry grinding. According to another embodiment of the present invention the GCC is obtained by wet grinding and optionally subsequent drying.

"Dolomite" in the meaning of the present invention is a calcium carbonate comprising mineral, namely a carbonic calcium-magnesium-mineral, having the chemical composition of CaMg(CO₃)₂ ("CaCO₃ · MgCO₃"). A dolomite mineral may contain at least 30.0 wt.-% MgCO₃, based on the total weight of dolomite, preferably more than 35.0 wt.-%, and more preferably more than 40.0 wt.-% MgCO₃.

According to one embodiment of the present invention, the calcium carbonate comprises one type of ground calcium carbonate. According to another embodiment of the present invention, the calcium carbonate comprises a mixture of two or more types of ground calcium carbonates selected from different sources.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation by combining calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment of the present invention, the precipitated calcium carbonate is precipitated calcium carbonate, preferably comprising aragonitic, vateritic or calcitic mineralogical crystal forms or mixtures thereof.

According to one embodiment of the present invention, the calcium carbonate comprises one type of precipitated calcium carbonate. According to another embodiment of the present invention, the calcium carbonate comprises a mixture of two or more precipitated calcium carbonates selected from different crystalline forms and different polymorphs of precipitated calcium carbonate. For example, the at least one precipitated calcium carbonate may comprise one PCC selected from S-PCC and one PCC selected from R-PCC.

According to a preferred embodiment of the present invention the at least one calcium carbonate-comprising material is ground calcium carbonate and/or precipitated calcium carbonate and preferably is ground calcium carbonate.

According to one embodiment of the present invention the at least one calcium carbonate-comprising material, preferably the ground calcium carbonate and/or the precipitated calcium carbonate has a content of calcium carbonate of at least 50 wt.-%, preferably at least 85 wt.-%, and more preferably at least 97 wt.-%, based on the total dry weight of the calcium carbonate-comprising material. According to another embodiment the at least one calcium carbonate comprising material consists of calcium carbonate.

The at least one calcium carbonate-comprising material, preferably the ground calcium carbonate and/or the precipitated calcium carbonate, is preferably in the form of a particulate material. According to one embodiment of the present invention that the at least one calcium carbonate-comprising material, preferably the ground calcium carbonate and/or the precipitated calcium carbonate, has a weight median particle size *d*₅₀ value in the range from 0.1 to 7 µm. For example, the at least one calcium carbonate-comprising material has a weight median particle size *d*₅₀ from 0.25 µm to 5 µm and preferably from 0.6 µm to 4 µm.

According to one embodiment of the present invention the at least one calcium carbonate-comprising material, preferably the ground calcium carbonate and/or the precipitated calcium carbonate, may have a top cut (*d*₉₈) of ≤ 15 µm. For example, the at least one calcium carbonate-comprising material may have a top cut (*d*₉₈) of ≤ 12.5 µm, preferably of ≤ 10 µm and most preferably of ≤ 7.5 µm.

According to another embodiment of the present invention the specific surface area of the ground calcium carbonate and/or the precipitated calcium carbonate, measured by the BET nitrogen method according to ISO 9277:2010 is in the range from 1 and 100 m²/g, preferably in the range from 2 to 60 m²/g and most preferably in the range from 3 to 8 m²/g.

According to another embodiment of the present invention the at least one calcium carbonate-comprising material is a surface-reacted calcium carbonate.

The surface-reacted calcium carbonate in the meaning of the present invention is a reaction product of natural ground calcium carbonate or precipitated calcium carbonate with carbon dioxide and one or more H₃O⁺ ion donors, wherein the carbon dioxide is formed in situ by the H₃O⁺ ion donors treatment and/or is supplied from an external source.

The natural and/or precipitated calcium carbonate may be used dry or suspended in water to prepare the surface-reacted calcium carbonate. Preferably, a corresponding slurry has a content of natural or precipitated calcium carbonate within the range of 1 wt.-% to 90 wt.-%, more preferably 3 wt.-% to 60 wt.-%, even more preferably 5 wt.-% to 40 wt.-%, and most preferably 10 wt.-% to 25 wt.-% based on the weight of the slurry.

An H₃O⁺ ion donor in the context of the present invention is a Bronsted acid and/or an acid salt.

In a preferred embodiment of the invention the surface-reacted calcium carbonate is obtained by a process comprising the steps of: (a) providing a suspension of natural or precipitated calcium carbonate, (b) adding at least one acid having a pKₐ value of 0 or less at 20°C or having a pKₐ value from 0 to 2.5 at 20°C to the suspension of step a), and (c) treating the suspension of step (a) with carbon dioxide before, during or after step (b). According to another embodiment the surface-reacted calcium carbonate is obtained by a process comprising the steps of: (A) providing a natural or precipitated calcium carbonate, (B) providing at least one water-soluble acid, (C) providing gaseous CO₂, (D) contacting said natural or precipitated calcium carbonate of step (A) with the at least one acid of step (B) and with the CO₂ of step (C), characterised in that: (i) the at least one acid of step B) has a pKₐ of greater than 2.5 and less than or equal to 7 at 20°C, associated with the ionisation of its first available hydrogen, and a corresponding anion is formed on loss of this first available hydrogen capable of forming a water-soluble calcium salt, and (ii) following contacting the at least one acid with natural or precipitated calcium carbonate, at least one water-soluble salt, which in the case of a hydrogen-containing salt has a pKₐ of greater than 7 at 20°C, associated with the ionisation of the first available hydrogen, and the salt anion of which is capable of forming water-insoluble calcium salts, is additionally provided.

Precipitated calcium carbonate may be ground prior to the treatment with carbon dioxide and at least one H₃O⁺ ion donor by the same means as used for grinding natural calcium carbonate as described above.

The one or more H₃O⁺ ion donor used for the preparation of surface reacted calcium carbonate may be any strong acid, medium-strong acid, or weak acid, or mixtures thereof, generating H₃O⁺ ions under the preparation conditions. According to the present invention, the at least one H₃O⁺ ion donor can also be an acidic salt, generating H₃O⁺ ions under the preparation conditions.

According to one embodiment, the at least one H₃O⁺ ion donor is a strong acid having a pKₐ of 0 or less at 20°C.

According to another embodiment, the at least one H₃O⁺ ion donor is a medium-strong acid having a pKₐ value from 0 to 2.5 at 20°C. If the pKₐ at 20°C is 0 or less, the acid is preferably selected from sulphuric acid, hydrochloric acid, or mixtures thereof. If the pKₐ at 20°C is from 0 to 2.5, the H₃O⁺ ion donor is preferably selected from H₂SO₃, H₃PO₄, oxalic acid, or mixtures thereof. The at least one H₃O⁺ ion donor can also be an acidic salt, for example, HSO₄⁻ or H₂PO₄⁻, being at least partially neutralized by a corresponding cation such as Li⁺, Na⁺ or K⁺, or HPO₄²⁻, being at least partially neutralised by a corresponding cation such as Li⁺, Na⁺, K⁺, Mg²⁺ or Ca²⁺. The at least one H₃O⁺ ion donor can also be a mixture of one or more acids and one or more acidic salts.

According to still another embodiment, the at least one H₃O⁺ ion donor is a weak acid having a pKₐ value of greater than 2.5 and less than or equal to 7, when measured at 20°C, associated with the ionisation of the first available hydrogen, and having a corresponding anion, which is capable of forming water-soluble calcium salts. Subsequently, at least one water-soluble salt, which in the case of a hydrogen-containing salt has a pKₐ of greater than 7, when measured at 20°C, associated with the ionisation of the first available hydrogen, and the salt anion of which is capable of forming water-insoluble calcium salts, is additionally provided. According to the preferred embodiment, the weak acid has a pKₐ value from greater than 2.5 to 5 at 20°C, and more preferably the weak acid is selected from the group consisting of acetic acid, formic acid, propanoic acid, and mixtures thereof. Exemplary cations of said water-soluble salt are selected from the group consisting of potassium, sodium, lithium and mixtures thereof. In a more preferred embodiment, said cation is sodium or potassium. Exemplary anions of said water-soluble salt are selected from the group consisting of phosphate, dihydrogen phosphate, monohydrogen phosphate, oxalate, silicate, mixtures thereof and hydrates thereof. In a more preferred embodiment, said anion is selected from the group consisting of phosphate, dihydrogen phosphate, monohydrogen phosphate, mixtures thereof and hydrates thereof. In a most preferred embodiment, said anion is selected from the group consisting of dihydrogen phosphate, monohydrogen phosphate, mixtures thereof and hydrates thereof. Water-soluble salt addition may be performed dropwise or in one step. In the case of drop wise addition, this addition preferably takes place within a time period of 10 min. It is more preferred to add said salt in one step.

According to one embodiment of the present invention, the at least one H₃O⁺ ion donor is selected from the group consisting of hydrochloric acid, sulphuric acid, sulphurous acid, phosphoric acid, citric acid, oxalic acid, acetic acid, formic acid, and mixtures thereof. Preferably the at least one H₃O⁺ ion donor is selected from the group consisting of hydrochloric acid, sulphuric acid, sulphurous acid, phosphoric acid, oxalic acid, H₂PO₄⁻, being at least partially neutralised by a corresponding cation such as Li⁺, Na⁺ or K⁺, HPO₄²⁻, being at least partially neutralised by a corresponding cation such as Li⁺, Na⁺, K⁺, Mg²⁺, or Ca²⁺ and mixtures thereof, more preferably the at least one acid is selected from the group consisting of hydrochloric acid, sulphuric acid, sulphurous acid, phosphoric acid, oxalic acid, or mixtures thereof, and most preferably, the at least one H₃O⁺ ion donor is phosphoric acid.

The one or more H₃O⁺ ion donor can be added to the suspension as a concentrated solution or a more diluted solution. Preferably, the molar ratio of the H₃O⁺ ion donor to the natural or precipitated calcium carbonate is from 0.01 to 4, more preferably from 0.02 to 2, even more preferably 0.05 to 1 and most preferably 0.1 to 0.58.

As an alternative, it is also possible to add the H₃O⁺ ion donor to the water before the natural or precipitated calcium carbonate is suspended.

In a next step, the natural or precipitated calcium carbonate is treated with carbon dioxide. If a strong acid such as sulphuric acid or hydrochloric acid is used for the H-₃O⁺ ion donor treatment of the natural or precipitated calcium carbonate, the carbon dioxide is automatically formed. Alternatively or additionally, the carbon dioxide can be supplied from an external source.

H₃O⁺ ion donor treatment and treatment with carbon dioxide can be carried out simultaneously which is the case when a strong or medium-strong acid is used. It is also possible to carry out H₃O⁺ ion donor treatment first, e.g. with a medium strong acid having a pKₐ in the range of 0 to 2.5 at 20°C, wherein carbon dioxide is formed in situ, and thus, the carbon dioxide treatment will automatically be carried out simultaneously with the H₃O⁺ ion donor treatment, followed by the additional treatment with carbon dioxide supplied from an external source.

Preferably, the concentration of gaseous carbon dioxide in the suspension is, in terms of volume, such that the ratio (volume of suspension): (volume of gaseous CO₂) is from 1:0.05 to 1:20, even more preferably 1:0.05 to 1:5.

In a preferred embodiment, the H₃O⁺ ion donor treatment step and/or the carbon dioxide treatment step are repeated at least once, more preferably several times. According to one embodiment, the at least one H₃O⁺ ion donor is added over a time period of at least about 5 min, preferably at least about 10 min, typically from about 10 to about 20 min, more preferably about 30 min, even more preferably about 45 min, and sometimes about 1 h or more.

Subsequent to the H₃O⁺ ion donor treatment and carbon dioxide treatment, the pH of the aqueous suspension, measured at 20°C, naturally reaches a value of greater than 6.0, preferably greater than 6.5, more preferably greater than 7.0, even more preferably greater than 7.5, thereby preparing the surface-reacted natural or precipitated calcium carbonate as an aqueous suspension having a pH of greater than 6.0, preferably greater than 6.5, more preferably greater than 7.0, even more preferably greater than 7.5.

Further details about the preparation of the surface-reacted natural calcium carbonate are disclosed in WO 00/39222 A1, WO 2004/083316 A1, WO 2005/121257 A2, WO 2009/074492 A1, EP 2 264 108 A1, EP 2 264 109 A1 and US 2004/0020410 A1, the content of these references herewith being included in the present application.

Similarly, surface-reacted precipitated calcium carbonate is obtained. As can be taken in detail from WO 2009/074492 A1, surface-reacted precipitated calcium carbonate is obtained by contacting precipitated calcium carbonate with H₃O⁺ ions and with anions being solubilised in an aqueous medium and being capable of forming water-insoluble calcium salts, in an aqueous medium to form a slurry of surface-reacted precipitated calcium carbonate, wherein said surface-reacted precipitated calcium carbonate comprises an insoluble, at least partially crystalline calcium salt of said anion formed on the surface of at least part of the precipitated calcium carbonate.

Said solubilised calcium ions correspond to an excess of solubilised calcium ions relative to the solubilised calcium ions naturally generated on dissolution of precipitated calcium carbonate by H₃O⁺ ions, where said H₃O⁺ ions are provided solely in the form of a counterion to the anion, i.e. via the addition of the anion in the form of an acid or non-calcium acid salt, and in absence of any further calcium ion or calcium ion generating source.

Said excess solubilised calcium ions are preferably provided by the addition of a soluble neutral or acid calcium salt, or by the addition of an acid or a neutral or acid non-calcium salt which generates a soluble neutral or acid calcium salt in situ.

Said H₃O⁺ ions may be provided by the addition of an acid or an acid salt of said anion, or the addition of an acid or an acid salt which simultaneously serves to provide all or part of said excess solubilised calcium ions.

In a further preferred embodiment of the preparation of the surface-reacted natural or precipitated calcium carbonate, the natural or precipitated calcium carbonate is reacted with the acid and/or the carbon dioxide in the presence of at least one compound selected from the group consisting of silicate, silica, aluminium hydroxide, earth alkali aluminate such as sodium or potassium aluminate, magnesium oxide, or mixtures thereof. Preferably, the at least one silicate is selected from an aluminium silicate, a calcium silicate, or an earth alkali metal silicate. These components can be added to an aqueous suspension comprising the natural or precipitated calcium carbonate before adding the acid and/or carbon dioxide.

Alternatively, the silicate and/or silica and/or aluminium hydroxide and/or earth alkali aluminate and/or magnesium oxide component(s) can be added to the aqueous suspension of natural or precipitated calcium carbonate while the reaction of natural or precipitated calcium carbonate with an acid and carbon dioxide has already started. Further details about the preparation of the surface-reacted natural or precipitated calcium carbonate in the presence of at least one silicate and/or silica and/or aluminium hydroxide and/or earth alkali aluminate component(s) are disclosed in WO 2004/083316 A1, the content of this reference herewith being included in the present application.

The surface-reacted calcium carbonate can be kept in suspension, optionally further stabilised by a dispersant. Conventional dispersants known to the skilled person can be used. A preferred dispersant is comprised of polyacrylic acids and/or carboxymethylcelluloses.

Alternatively, the aqueous suspension described above can be dried, thereby obtaining the solid (i.e. dry or containing as little water that it is not in a fluid form) surface-reacted natural or precipitated calcium carbonate in the form of granules or a powder.

The surface reacted calcium carbonate may have different particle shapes, such as e.g. the shape of roses, golf balls and/or brains.

In a preferred embodiment, the specific surface area of the surface-reacted calcium carbonate as measured by the BET nitrogen method according to ISO 9277:2010 is in the range from 1 to 250 m²/g, preferably in the range from 2 to 200 m²/g, and most preferably in the range from 35 to 150 m²/g. For example, the surface-reacted calcium carbonate has a specific surface area of from 45 to 150 m²/g, or from 75 to 140 m²/g, measured using nitrogen and the BET method. The BET specific surface area in the meaning of the present invention is defined as the surface area of the particles divided by the mass of the particles. As used therein the specific surface area is measured by adsorption using the BET isotherm (ISO 9277:2010) and is specified in m²/g.

It is furthermore preferred that the surface-reacted calcium carbonate particles have a volume median grain diameter *d*₅₀(vol) of from 1 to 75 µm, preferably from 2 to 50 µm, more preferably 3 to 40 µm, even more preferably from 4 to 30 µm, and most preferably from 5 to 15 µm.

It may furthermore be preferred that the surface-reacted calcium carbonate particles have a grain diameter *d*₉₈(vol) of from 2 to 150 µm, preferably from 4 to 100 µm, more preferably 6 to 80 µm, even more preferably from 8 to 60 µm, and most preferably from 10 to 30 µm.

The processes and instruments are known to the skilled person and are commonly used to determine grain size of fillers and pigments.

The specific pore volume is measured by mercury intrusion porosimetry using a Micromeritics Autopore V 9620 mercury porosimeter having a maximum applied pressure of mercury 414 MPa (60 000 psi), equivalent to a Laplace throat diameter of 0.004 µm (∼ nm). The equilibration time used at each pressure step is 20 s. The sample material is sealed in a 3 cm³ chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p1753-1764).

The total pore volume seen in the cumulative intrusion data can be separated into two regions with the intrusion data from 214 µm down to about 1 - 4 µm showing the coarse packing of the sample between any agglomerate structures contributing strongly. Below these diameters lies the fine interparticle packing of the particles themselves. If they also have intraparticle pores, then this region appears bi modal, and by taking the specific pore volume intruded by mercury into pores finer than the modal turning point, i.e. finer than the bi-modal point of inflection, the specific intraparticle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including pore-shielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

Preferably, the surface-reacted calcium carbonate has an intra-particle intruded specific pore volume in the range from 0.1 to 2.3 cm³/g, more preferably from 0.2 to 2.0 cm³/g, especially preferably from 0.4 to 1.8 cm³/g and most preferably from 0.6 to 1.6 cm³/g, calculated from mercury porosimetry measurement.

The intra-particle pore size of the surface-reacted calcium carbonate preferably is in a range of from 0.004 to 1.6 µm, more preferably in a range of between 0.005 to 1.3 µm, especially preferably from 0.006 to 1.15 µm and most preferably of 0.007 to 1.0 µm, e.g. 0.01 to 0.9 µm determined by mercury porosimetry measurement.

The aqueous suspension comprises from 5 to 85 wt.-%, based on the total weight of the suspension, of at least one calcium carbonate-comprising material. According to a preferred embodiment the aqueous suspension comprises from 10 to 84 wt.-%, preferably from 30 to 83 wt.-%, more preferably from 50 to 82 wt.-%, even more preferably from 60 to 80 wt.-% and most preferably from 68 to 78 wt.-%, based on the total weight of the suspension, of at least one calcium carbonate-comprising material.

The aqueous suspension comprises water and the at least one calcium carbonate comprising material. Additionally, the aqueous suspension may comprise further solvents that are miscible with water. For example, the aqueous suspension may comprise organic solvents like ethanol, methanol, acetone, ethylene glycol, glycerine or propanol. According to a preferred embodiment the aqueous suspension consists of water and the at least one calcium carbonate-comprising material.

Optionally, the aqueous calcium carbonate-comprising material comprises further additives.

In one preferred embodiment of the present invention, the aqueous calcium carbonate-comprising material comprises an additional dispersing agent or grinding agent, e.g. a polyacrylate. In another preferred embodiment of the present invention, the aqueous calcium carbonate-comprising material is free of additional dispersing and/or grinding agents, e.g. polyacrylate.

According to the present invention the aqueous suspension comprising from 5 to 85 wt.-%, based on the total weight of the suspension, of at least one calcium carbonate-comprising material has a pH of between 7.0 and 14. According to a preferred embodiment the pH of the aqueous suspension is between 7.5 and 12, preferably between 8.2 and 10.0 and most preferably between 8.5 and 9.5.

A pH value of between 7.0 and 14 of the aqueous suspension comprising from 5 to 85 wt.-%, based on the total weight of the suspension, of at least one calcium carbonate-comprising material and optionally urea is set either automatically by preparing the aqueous suspension comprising from 5 to 85 wt.-%, based on the total weight of the suspension, of at least one calcium carbonate-comprising material and optionally urea or may be adjusted by adding at least one base to the aqueous suspension.

The expression "at least one" base means that one or more, for example two or three bases may be added to the aqueous suspension. According to another embodiment only one base is added to the aqueous suspension. Preferably, the pH value of between 7.0 and 14 of the aqueous suspension comprising from 5 to 85 wt.-%, based on the total weight of the suspension, of at least one calcium carbonate-comprising material and optionally urea is set automatically by preparing the aqueous suspension.

The at least one base may be any base that is soluble in water and is known to the skilled person. For example, the base may be selected from the group consisting of calcium hydroxide, magnesium hydroxide, calcium hydrogen carbonate, sodium hydroxide, potassium hydroxide, lithium hydroxide, ammonium hydroxide, primary, secondary and tertiary amines and mixtures thereof, more preferably is calcium hydroxide and/or ammonium hydroxide and most preferably is calcium hydroxide.

Primary, secondary or tertiary amines in the meaning of the present invention are derivatives of ammonia, wherein one or more hydrogen atoms have been replaced by a substituent such as an alkyl or aryl group.

The addition of the at least one base to the aqueous suspension can be accomplished by any conventional means known to the skilled person. Preferably, the addition may be carried out under mixing and/or homogenizing and/or particle dividing conditions. The skilled person will adapt these mixing and/or homogenizing and/or particle dividing conditions such as the mixing speed, dividing, and temperature according to his process equipment.

The pH value of the present invention can be measured with any pH meter that may be used for measuring the pH in suspension, for example, a Mettler Toledo Seven Easy pH meter with a Mettler Toledo InLab® Expert Pro pH electrode. The pH is measure at 25°C and the pH is stable according to the present invention when there is no change in the pH value within ± 0.2 units for 5 min.

According to the present invention urea is used as an antimicrobial additive.

The term "urea" or "carbamide" according to the present invention refers to an organic compound with the chemical formula CO(NH₂)₂ as well as hydrates thereof and salts thereof. An "urea hydrate" according to the present invention is an organic compound that comprises urea and water molecules. Urea hydrates are known to the skilled person and commercially available, for example, urea monohydrate with the CAS No. 163931-63-3. An "urea salt" according to the present invention is an organic compound that comprises urea and further ions. Urea salts are known to the skilled person and are commercially available, for example, urea phosphate with the CAS No. 4861-16-2 or urea hydrogen peroxide with the CAS No. 124-43-6.

The urea according to the present invention may comprise one or more different chemicals. For example, the urea may comprise CO(NH₂)₂ and urea monohydrate. According to a preferred embodiment the urea according to the present invention merely consist of CO(NH₂)₂.

The urea can be used as a dry material or in the form of a water based solution.

If urea is used as dry material it is a solid material which means that the urea is solid under standard ambient temperature and pressure (SATP) which refers to a temperature of 298.15 K (25°C) and an absolute pressure of exactly 100 000 Pa (1 bar, 14.5 psi, 0.98692 atm). The solid urea can be used for example as powder, tablet, granules, flakes etc.

However, the urea may also be used in the form of a water based solution wherein the urea is dissolved in a solvent.

The solvent that may be used to dissolve the urea may be water and/or an organic solvent that is miscible with water, for example, an organic solvent like ethanol, methanol, acetone, ethylene glycol, glycerine or propanol. For example, the solvent is a mixture of water and at least one organic solvent that is miscible with water. According to a preferred embodiment the solvent consists only of water.

According to one embodiment the urea is used as a water based solution preferably in the form of a water based solution comprising from 20 to 75 wt.-%, more preferably from 30 to 72 wt.-%, even more preferably from 40 to 65 wt.-% and most preferably from 50 to 60 wt.-% of urea, based on the total weight of the water based solution.

According to one embodiment of the present invention the antimicrobial additive is added as a water based solution to the aqueous suspension comprising the calcium carbonate-comprising material, preferably in the form of a water based solution comprising from 20 to 75 wt.-%, more preferably from 30 to 72 wt.-%, even more preferably from 40 to 65 wt,-% and most preferably from 50 to 60 wt.-% of urea, based on the total weight of the water based solution.

According to another embodiment of the present invention the antimicrobial additive is added as a dry material to the aqueous suspension comprising the calcium carbonate-comprising material.

According to another embodiment of the present invention the antimicrobial additive is used in the suspension in an amount of 1.2 to 20 wt.-%, preferably in an amount of 1.5 to 15 wt.-%, more preferably in an amount of 2.0 to 10 wt.-%, and most preferably in an amount of 2.5 to 8.5 wt.-%, based on the total weight of the suspension.

According to another embodiment of the present invention the antimicrobial additive is added to the suspension in an amount of 1.2 to 20 wt.-%, preferably in an amount of 1.5 to 15 wt.-%, more preferably in an amount of 2.0 to 10 wt.-%, and most preferably in an amount of 2.5 to 8.5 wt.-%, based on the total weight of the suspension.

According to the present invention urea is used as an antimicrobial additive in an aqueous suspension according to claim 1, wherein the weight ratio of urea : water in the aqueous suspension is from 1:100 to 50:100. According to one embodiment of the present invention the weight ratio of urea : water in the aqueous suspension is from 5:100 to 40:100 and preferably from 9:100 to 30:100.

The inventors surprisingly found that by the use of urea as antimicrobial agent in aqueous suspensions according to claim 1 it is possible to prevent or reduce the occurrence of at least one strain of bacteria and/or at least one strain of yeast and/or at least one strain of mould in the aqueous suspension. Therefore, urea is effective against at least one strain of bacteria and/or at least one strain of yeast and/or at least one strain of mould in the aqueous suspension according to claim 1.
In one embodiment of the present invention, the at least one strain of bacteria is selected from the group consisting of gram-negative bacteria, gram-positive bacteria and mixtures thereof.

It is appreciated that gram-positive and gram-negative bacteria are well known in the art and are e.g. described in Biology of Microorganisms, "Brock", Madigan MT, Martinko JM, Parker J, 1997, 8th Edition. In particular, such bacteria represent evolutionary very distantly related classes of bacteria each comprising of many bacterial families. Gram negative bacteria are characterized by two membranes (outer and inner membrane) while gram positive bacteria contain only one membrane. Usually, the former contains a high amount of lipopolysaccharide and a thin single-layer of peptidoglycan, while the latter has virtually no lipopolysaccharide, a multi-layered thick peptidoglycan and the coat contains teichoic acids. For these differences the Gram positive and Gram negative bacteria react differently on environmental influences. Methods for discriminating gram-positive and gram-negative bacteria include species identification by DNA sequencing techniques or biochemical characterisations. Alternatively, the number of membranes can be determined directly by thin section transmission electron microscopy.

The term "at least one strain of bacteria" in the meaning of the present invention means that the strain of bacteria comprises, preferably consists of, one or more strains of bacteria.

In one embodiment of the present invention, the at least one strain of bacteria comprises, preferably consists of, one strain of bacteria. Alternatively, the at least one strain of bacteria comprises, preferably consists of, two or more strains of bacteria. For example, the at least one strains of bacteria comprises, preferably consists of, two or three strains of bacteria. Preferably, the at least one strain of bacteria comprises, preferably consists of, two or more strains of bacteria.

For example, the at least one strain of bacteria is selected from the group comprising *Methylobacterium sp., Salmonella sp., Escherichia sp.* such as *Escherichia coli, Shigella sp., Enterobacter sp., Pseudomonas sp.* such as *Pseudomonas mendocina, Pseudomonas stutzeri, Pseudomonas aeruginosa,* and/or *Pseudomonas putida, Burkholderia sp.* such as *Burkholderia cepacia, Bdellovibrio sp., Agrobacterium sp., Alcaligenes sp.* such as *Alcaligenes faecalis, Flavobacterium sp., Ochrobactrum sp. such as Ochrobactrum tritici, Kocuria sp.* such as *Kocuria rhizophila, Rhizobium sp.* such as *Rhizobium radiobacter, Sphingobacterium sp., Sphingomonas sp., Aeromonas sp., Chromobacterium sp., Vibrio sp., Hyphomicrobium sp., Leptothrix sp., Micrococcus sp., Staphylococcus sp.* such as *Staphylococcus aureus, Agromyces sp., Acidovorax sp., Comamonas sp.* such as *Comomonas aquatic, Brevundimonas sp.* such as *Brevundimonas intermedia* and *Brevundimonas diminiuta, Spingobium sp.* such as *Spingobium yanoikuyae, Thauera sp.* such as *Thauera mechernichensis, Caldimonas sp., Hdrogenophaga sp., Teipidomonas sp.,* and mixtures thereof,
For example, the at least one strain of bacteria is selected from *Escherichia* sp. such as *Escherichia coli, Staphylococcus* sp. such as *Staphylococcus aureus,* and mixtures thereof.

Additionally or alternatively, the at least one strain of yeast is selected from the group comprising *Saccharomycotina, Taphrinomycotina, Schizosaccharomycetes, Basidiomycota, Agaricomycotina, Tremellomycetes, Pucciniomycotina, Microbotryomycetes, Candida sp.* such as *Candida albicans, Candida tropicalis, Candida stellatoidea, Candida glabrata, Candida krusei, Candida guilliermondii, Candida viswanathii, Candida lusitaniae* and mixtures thereof, *Yarrowia sp.* such as *Yarrowia lipolytica, Cryptococcus* sp. such as *Cryptococcus gattii* and *Cryptococcus neofarmans, Zygosaccharomyces sp., Rhodotorula sp.* such as *Rhodotorula mucilaginosa, Saccharomyces sp.* such as *Saccharomyces cerevisiae, Pichia sp.* such as *Pichia membranifaciens* and mixtures thereof.

The term "at least one strain of yeast" in the meaning of the present invention means that the strain of yeast comprises, preferably consists of, one or more strains of yeast.

In one embodiment of the present invention, the at least one strain of yeast comprises, preferably consists of, one strain of yeast. Alternatively, the at least one strain of yeast comprises, preferably consists of, two or more strains of yeast. For example, the at least one strains of yeast comprises, preferably consists of, two or three strains of yeast. Preferably, the at least one strain of yeast comprises, preferably consists of, two or more strains of yeast.

Additionally or alternatively, the at least one strain of mould is selected from the group comprising of *Acremonium sp., Alternaria sp., Aspergillus sp., Cladosporium sp., Fusarium sp., Mucor sp., Penicillium sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

The term "at least one strain of mould" in the meaning of the present invention means that the strain of mould comprises, preferably consists of, one or more strains of mould.

In one embodiment of the present invention, the at least one strain of mould comprises, preferably consists of, one strain of mould. Alternatively, the at least one strain of mould comprises, preferably consists of, two or more strains of mould. For example, the at least one strains of mould comprises, preferably consists of, two or three strains of mould. Preferably, the at least one strain of mould comprises, preferably consists of, two or more strains of mould.

It is preferred that the at least one antimicrobial agent is effective against at least one strain of bacteria and at least one strain of yeast and at least one strain of mould when present in the aqueous suspension.

Alternatively, the at least one antimicrobial agent is effective against at least one strain of bacteria or at least one strain of yeast or at least one strain of mould when present in the aqueous suspension.

According to another embodiment of the present invention no further antimicrobial additives apart from urea are added to or used in the aqueous suspension.

In the meaning of the present invention, antimicrobial agents are agents which have the ability to stabilise the aqueous preparation, i.e. to prevent or reduce microbial growth of at least one strain of bacteria and/or at least one strain of yeast and/or at least one strain of mould, when dosed in usual amounts (e.g. as proposed by the supplier of the antimicrobial agent). Antimicrobial agents are known to the skilled person and are commercially available, such as glutaraldehyde, 2,2-dibromo-3-nitrilopropionamide, bronopol, or orthophenylphenol.

According to another embodiment of the present invention the urea is used as antimicrobial additive in an aqueous suspension consisting of 5 to 85 wt.-%, based on the total weight of the suspension, of at least one calcium carbonate-comprising material and water and having a pH of between 7.0 and 14, wherein the antimicrobial additive is present in the suspension in an amount of at least 1.2 wt.-%, based on the total weight of the aqueous suspension and wherein the weight ratio of urea : water in the aqueous suspension is from 1:100 to 50:100.

According to a preferred embodiment of the present invention the urea is used as antimicrobial additive in an aqueous suspension consisting of 5 to 85 wt.-%, based on the total weight of the suspension, of at least one calcium carbonate-comprising material and water and having a pH of between 7.0 and 14, wherein the antimicrobial additive is present in the suspension in an amount of at least 1.2 wt.-%, based on the total weight of the aqueous suspension and wherein the weight ratio of urea : water in the aqueous suspension is from 1:100 to 50:100 and wherein no further antimicrobial additives apart from urea are used in the aqueous suspension.

According to another preferred embodiment of the present invention the urea is used as antimicrobial additive in an aqueous suspension consisting of 5 to 85 wt.-%, based on the total weight of the suspension, of at least one calcium carbonate-comprising material and water and having a pH of between 7.0 and 14, wherein the antimicrobial additive is present in the suspension in an amount of at least 1.2 wt.-%, based on the total weight of the aqueous suspension and wherein the weight ratio of urea : water in the aqueous suspension is from 9:100 to 30:100 and wherein no further antimicrobial additives apart from urea are used in the aqueous suspension and wherein the urea consist only of CO(NH₂)₂.

According to another preferred embodiment of the present invention the urea is used as antimicrobial additive in an aqueous suspension consisting of 68 to 78 wt.-%, based on the total weight of the suspension, of at least one calcium carbonate-comprising material and water and having a pH of between 8.5 and 9.5, wherein the antimicrobial additive is present in the suspension in an amount of 2.5 to 8.5 wt.-%, based on the total weight of the aqueous suspension and wherein the weight ratio of urea : water in the aqueous suspension is from 9:100 to 30:100.

The inventors surprisingly found that by the use of urea as antimicrobial additive according to claim 1 it is possible to preserve an aqueous suspension comprising a calcium carbonate-comprising material against microbial growth, especially against the growth of bacteria and/or yeast and/or mould. By using urea as antimicrobial additive according to claim 1 the aqueous suspension or slurries have not to be subjected to a heating step in order to avoid the microbial growth and, therefore, by using urea as antimicrobial additive slurries can be provided without a time or energy-consuming heating step. Furthermore, no further antimicrobial agents apart from urea have to be used in the present invention to preserve an aqueous suspension comprising a calcium carbonate-comprising material against microbial growth, especially against the growth of bacteria and/or yeast and/or mould.

Furthermore, urea is a naturally occurring substance that is formed in the body of humans and animals with a low toxicity and, thus is considered safe for the environment and human health. Therefore, by the use of urea as antimicrobial additive according to claim 1 it is possible to provide suspensions/slurries that are preserved against microbial growth without providing toxic or hazardous compounds. Additionally, when using urea as antimicrobial additive according to claim 1 in an aqueous suspension, comprising at least one calcium carbonate-comprising material the aqueous suspensions are not only preserved against the growth or formation of bacteria and/or yeast and/or mould but these aqueous compositions may also be used as nitrogen fertilizers in agriculture.

If the aqueous compositions are used as nitrogen fertilizers in agriculture, they may further comprise ammonium nitrate, which is also a nitrogen source. Ammonium nitrate is the nitrate salt of the ammonium cation and has the chemical formula NH₄NO₃, simplified to N₂H₄O₃. It is a white crystal solid and is highly soluble in water. Ammonium nitrate is known to the skilled person and commercial available. The aqueous compositions may comprise up to 40 wt.-% of ammonium nitrate, based on the dry weight of the urea.

### Process for preserving an aqueous suspension against microbial growth

According to the present invention a process for preserving an aqueous suspension against microbial growth is provided, the process comprising the steps of:
a) providing at least one calcium carbonate-comprising material,
b) providing urea as antimicrobial additive,
c) contacting the at least one calcium carbonate-comprising material of step a) with the at least one antimicrobial additive of step b) to provide an aqueous suspension,
wherein the aqueous suspension comprises from from 5 to 85 wt.-%, based on the total weight of the suspension, of at least one calcium carbonate-comprising material and has a pH of between 7.0 and 14, and
wherein the aqueous suspension comprises the antimicrobial additive in an amount of at least 1.2 wt.-% based on the total weight of the suspension and wherein the weight ratio of urea : water in the aqueous suspension is from 1:100 to 50:100.

According to another aspect of the present invention a process for preserving an aqueous suspension against microbial growth is provided, the process comprising the steps of:
a) providing at least one calcium carbonate-comprising material,
b) providing urea as antimicrobial additive,
c) combining the at least one calcium carbonate-comprising material of step a) with the at least one antimicrobial additive of step b) to provide an aqueous suspension,
   wherein the aqueous suspension comprises from from 5 to 85 wt.-%, based on the total weight of the suspension, of at least one calcium carbonate-comprising material and has a pH of between 7.0 and 14, and
   wherein the aqueous suspension comprises the antimicrobial additive in an amount of at least 1.2 wt.-% based on the total weight of the suspension and wherein the weight ratio of urea : water in the aqueous suspension is from 1:100 to 50:100, and
d) mixing the aqueous suspension obtained in step c).

### Characterization of step a): provision of a calcium carbonate-comprising material

According to step a) a calcium carbonate-comprising material is provided as defined above.

According to one embodiment of the inventive process the calcium carbonate-comprising material is selected from the group consisting of ground calcium carbonate, preferably marble, limestone, dolomite and/or chalk, precipitated calcium carbonate, preferably vaterite, calcite and/or aragonite and surface-reacted calcium carbonate, wherein the surface-reacted calcium carbonate is a reaction product of natural ground or precipitated calcium carbonate with carbon dioxide and one or more H₃O⁺ ion donors in an aqueous medium, wherein the carbon dioxide is formed in situ by the H₃O⁺ ion donor treatment and/or is supplied from an external source and mixtures thereof, more preferably the at least one calcium carbonate-comprising material is surface-reacted calcium carbonate.

It is appreciated that the calcium carbonate-comprising material can be provided in form of an aqueous suspension or in dry form.

If the calcium carbonate-comprising material in form of an aqueous suspension, the aqueous suspension has a solids content in the range from 5 to 85 wt.-%, based on the total weight of the aqueous suspension. According to a preferred embodiment the solids content of the aqueous suspension is in the range from 10 to 84 wt.-%, more preferably in the range from 30 to 83 wt.-%, more preferably in the range from 50 to 82 wt.-%, even more preferably in the range from 60 to 80 wt.-% and most preferably in the range from 68 to 78 wt.-%, based on the total weight of the aqueous suspension.

The term "aqueous" suspension refers to a system, wherein the liquid phase comprises, preferably consists of, water. However, said term does not exclude that the liquid phase of the aqueous suspension comprises minor amounts of at least one water-miscible organic solvent selected from the group comprising methanol, ethanol, acetone, acetonitrile, tetrahydrofuran and mixtures thereof. If the aqueous suspension comprises at least one water-miscible organic solvent, the liquid phase of the aqueous suspension comprises the at least one water-miscible organic solvent in an amount of from 0.1 to 40.0 wt.-%, preferably from 0.1 to 30.0 wt.-%, more preferably from 0.1 to 20.0 wt.-% and most preferably from 0.1 to 10.0 wt.-%, based on the total weight of the liquid phase of the aqueous suspension. For example, the liquid phase of the aqueous suspension consists of water.

According to a preferred embodiment the aqueous suspension consists of water and the calcium carbonate-comprising material.

Alternatively, the aqueous surface-reacted calcium carbonate suspension comprises further additives.

Additionally or alternatively, the aqueous calcium carbonate-comprising material suspension comprises a dispersing and/or grinding agent, e.g. a polyacrylate.

Alternatively, the calcium carbonate-comprising material provided in step a) is a dry calcium carbonate-comprising material.

For example, the calcium carbonate-comprising material provided in step a) has a moisture content of less than 10.0 wt.-% based on the dry weight of the calcium carbonate-comprising material provided in step a).

In one embodiment, the calcium carbonate-comprising material provided in step a) has a moisture content of from 0.01 wt.-% to 10.0 wt.-%, preferably from 0.01 wt.-% to 8.0 wt.-% and more preferably from 0.01 wt.-% to 6.0 wt.-% based on the dry weight of the calcium carbonate-comprising material provided in step a).

### Characterization of step b): provision of urea as antimicrobial additive

According to step b) urea as antimicrobial additive is provided as defined above.

The antimicrobial additive urea can be used as a dry material or in the form of a water based solution.

According to one embodiment urea is provided in the form of a dry material. More precisely it is provided in the form of a solid material which means that the urea is solid under standard ambient temperature and pressure (SATP) which refers to a temperature of 298.15 K (25°C) and an absolute pressure of exactly 100 000 Pa (1 bar, 14.5 psi, 0.98692 atm). The solid urea may be provided as powder, tablet, granules, flakes etc.

However, the urea may also be provided in the form of a water based solution wherein the urea is dissolved in a solvent.

The solvent that may be used to dissolve the urea may be water and/or an organic solvent that is miscible with water, for example, an organic solvent like ethanol, methanol, acetone, ethylene glycol, glycerine or propanol. For example, the solvent is a mixture of water and at least one organic solvent that is miscible with water. According to a preferred embodiment the solvent consists only of water.

According to one embodiment the urea is provided in the form of a water based solution preferably in the form of a water based solution comprising from 20 to 75 wt.-%, more preferably from 30 to 72 wt.-%, even more preferably from 40 to 65 wt.-% and most preferably from 50 to 60 wt.-% of urea, based on the total weight of the water based solution.

Alternatively, the urea is provided in the form of a water based solution preferably in the form of a water based solution comprising from 1.7 to 20 wt.-%, preferably in an amount of 1.8 to 15 wt.-%, more preferably in an amount of 2.0 to 10 wt.-%, and most preferably in an amount of 2.5 to 8.5 wt.-%, based on the total weight of the water based solution.

According to another embodiment of the present invention the antimicrobial additive is provided in the form of a dry material.

According to another embodiment urea is provided in form of a water based solution wherein the weight ratio of urea : water in the water based solution is from 1:100 to 50:100, preferably from 5:100 to 40:100 and more preferably from 9:100 to 30:100.

### Characterization of step c): combining the calcium carbonate-comprising material with the antimicrobial additive

According to step c) the calcium carbonate-comprising material of step a) is combined with the at least one microbial additive of step b) to provide an aqueous suspension.

The combination may be done in one or more steps.

It is required that the combination is done in step c), such that the aqueous suspension comprises from from 5 to 85 wt.-%, based on the total weight of the suspension, of at least one calcium carbonate-comprising material and has a pH of between 7.0 and 14, and the aqueous suspension comprises the antimicrobial additive in an amount of at least 1.2 wt.-% based on the total weight of the suspension and wherein the weight ratio of urea : water in the aqueous suspension is from 1:100 to 50:100.

The step of combining the calcium carbonate-comprising material of step a) with the with the at least one antimicrobial additive of step b) to provide an aqueous suspension, in one or more steps, preferably takes place under mixing conditions. The skilled man will adapt these mixing conditions (such as the configuration of mixing pallets and mixing speed) according to his process equipment.

For example, the mixing may take place by means of a ploughshare mixer. Ploughshare mixers function by the principle of a fluidized bed produced mechanically. Ploughshare blades rotate close to the inside wall of a horizontal cylindrical drum and convey the components of the mixture out of the product bed and into the open mixing space. The fluidized bed produced mechanically ensures intense mixing of even large batches in a very short time. Choppers and/or dispersers are used to disperse lumps in a dry operation. Equipment that may be used in the inventive process is available, for example, from Gebrüder Lödige Maschinenbau GmbH, Germany or from VISCO JET Rührsysteme GmbH, Germany or from MTI Mischtechnik International GmbH, Germany.

According to one embodiment the at least one calcium carbonate-comprising material of step a) is provided in form of a slurry and the at least one antimicrobial additive of step b) is added in dry form or in form of an aqueous solution. For example, the least one calcium carbonate-comprising material of step a) is provided in form of a slurry and the at least one antimicrobial additive of step b) is added in dry form. Alternatively, the least one calcium carbonate-comprising material of step a) is provided in form of a slurry and the at least one antimicrobial additive of step b) is added in form of an aqueous solution.

According to a preferred embodiment, the least one calcium carbonate-comprising material of step a) is provided in form of a slurry, wherein the aqueous suspension/slurry comprises from 5 to 85 wt.-%, preferably from 10 to 84 wt.-%, more preferably from 30 to 83 wt.-% more preferably from 50 to 82 wt.-%, even more preferably from 60 to 80 wt.-% and most preferably from 68 to 78 wt.-%, based on the total weight of the slurry, of at least one calcium carbonate-comprising material and the at least one antimicrobial additive of step b) is added in dry form.

According to another preferred embodiment, the least one calcium carbonate-comprising material of step a) is provided in form of a slurry, wherein the aqueous suspension/slurry comprises from 5 to 85 wt.-%, preferably from 10 to 84 wt.-%, more preferably from 30 to 83 wt.-% more preferably from 50 to 82 wt.-%, even more preferably from 60 to 80 wt.-% and most preferably from 68 to 78 wt.-%, based on the total weight of the slurry, of at least one calcium carbonate-comprising material and the at least one antimicrobial additive of step b) is added in form of a water based solution to the aqueous suspension comprising the calcium carbonate-comprising material, preferably in the form of a water based solution comprising from 20 to 75 wt.-%, more preferably from 30 to 72 wt.-%, even more preferably from 40 to 65 wt,-% and most preferably from 50 to 60 wt.-% of urea, based on the total weight of the water based solution.

According to another embodiment the at least one calcium carbonate-comprising material of step a) is provided in form of a dry material or slurry and the at least one antimicrobial additive of step b) is provided in form of an aqueous solution. For example, the at least one antimicrobial additive of step b) is provided in form of an aqueous solution comprising from 1.7 to 20 wt.-%, preferably in an amount of 1.8 to 15 wt.-%, more preferably in an amount of 2.0 to 10 wt.-%, and most preferably in an amount of 2.5 to 8.5 wt.-%, based on the total weight of the water based solution and the at least one calcium carbonate-comprising material of step a) is added in form of a dry material.

In one embodiment the method is carried out in a continuous mode. In this case, it is possible to add the at least one antimicrobial additive to the calcium carbonate-comprising material of step a) in a constant flow such that a constant concentration of the at least one antimicrobial additive is provided during step c).

Alternatively, the at least one antimicrobial additive is added to the calcium carbonate-comprising material of step a) in one step, wherein said at least one antimicrobial additive is preferably added in one portion.

In another embodiment the method can be carried out in a batch mode, i.e. the at least one antimicrobial additive is added to the calcium carbonate-comprising material of step a) in more than one step, wherein said at least one antimicrobial additive is preferably added in about equal portions. Alternatively, it is also possible to add the at least one antimicrobial additive in unequal portions to the aqueous calcium carbonate-comprising material of step a), i.e. in larger and smaller portions.

According to one embodiment of the present invention, step c) is carried out in a batch or continuous process for a period of time from 0.1 to 1 000 s. For example, step c) is a continuous process and comprises one or several contacting steps and the total contacting time is from 0.1 to 20 s, preferably from 0.5 to 15 s and most preferably from 1 to 10 s.

In order to obtain a sufficient combining of the calcium carbonate-comprising material of step a) with the at least one antimicrobial additive of step b), combining step c) preferably takes place under mixing conditions. The skilled man will adapt these mixing conditions (such as the configuration of mixing pallets and mixing speed) according to his process equipment.

In one embodiment, combining step c) is carried out for at least 1 min, preferably for at least 5 min, e.g. for at least 10 min, 15 min, 20 min, 30 min or 45 min. Additionally or alternatively, combining step c) is carried out for at most 60 min, preferably for at most 45 min, e.g. for at most 30 min.

For example, combining step c) is carried out for a period of time ranging from 1 min to 60 min, preferably for a period of time ranging from 10 min to 45 min, and most preferably from 10 min to 30 min. For example, the combining step c) is carried out for 20 min ±5 minutes.

The combination is done in step c), such that the aqueous suspension comprises from from 5 to 85 wt.-%, based on the total weight of the suspension, of at least one calcium carbonate-comprising material and has a pH of between 7.0 and 14, and the aqueous suspension comprises the antimicrobial additive in an amount of at least 1.2 wt.-% based on the total weight of the suspension and wherein the weight ratio of urea : water in the aqueous suspension is from 1:100 to 50:100.

According to a preferred embodiment the the antimicrobial additive is added to the suspension in an amount of 1.2 to 20 wt.-%, preferably in an amount of 1.5 to 15 wt.-%, more preferably in an amount of 2.0 to 10 wt.-%, and most preferably in an amount of 2.5 to 8.5 wt.-%, based on the total weight of the suspension.

The combination is done in step c), such that the aqueous suspension comprises from from 5 to 85 wt.-%, based on the total weight of the suspension, of at least one calcium carbonate-comprising material and has a pH of between 7.0 and 14, and the aqueous suspension comprises the antimicrobial additive in an amount of at least 1.2 wt.-% based on the total weight of the suspension, preferably in an amount of 1.2 to 20 wt.-%, more preferably in an amount of 1.5 to 15 wt.-%, even more preferably in an amount of 2.0 to 10 wt.-%, and most preferably in an amount of 2.5 to 8.5 wt.-%, based on the total weight of the suspension and wherein the weight ratio of urea : water in the aqueous suspension is from 1:100 to 50:100.

According to another embodiment of the present invention the pH of the aqueous suspension is between 7.5 and 12, preferably between 8.2 and 10.0 and most preferably between 8.5 and 9.5.

The combination is done in step c), such that the aqueous suspension comprises from from 5 to 85 wt.-%, based on the total weight of the suspension, of at least one calcium carbonate-comprising material and has a pH of between 7.0 and 14, preferably between 7.5 and 12, more preferably between 8.2 and 10.0 and most preferably between 8.5 and 9.5, and the aqueous suspension comprises the antimicrobial additive in an amount of at least 1.2 wt.-% based on the total weight of the suspension and wherein the weight ratio of urea : water in the aqueous suspension is from 1:100 to 50:100.

According to another embodiment of the present invention the weight ratio of urea : water in the aqueous suspension is from 5:100 to 40:100 and preferably from 9:100 to 30:100.

The combination is done in step c), such that the aqueous suspension comprises from from 5 to 85 wt.-%, based on the total weight of the suspension, of at least one calcium carbonate-comprising material and has a pH of between 7.0 and 14, and the aqueous suspension comprises the antimicrobial additive in an amount of at least 1.2 wt.-% based on the total weight of the suspension and wherein the weight ratio of urea : water in the aqueous suspension is from 1:100 to 50:100, preferably from 5:100 to 40:100 and more preferably from 9:100 to 30:100.

According to a preferred embodiment the process according to the present invention does not comprise a further process step of adding further antimicrobial additives apart from urea to the aqueous suspension.

According to another preferred embodiment the process according to the present invention does not comprise a heating step. The term "heating step" refers to a step wherein the aqueous suspension is heated above 25°C for a certain period of time, for example at least 30 s.

The inventors surprisingly found that by the process of the present invention it is possible to preserve an aqueous suspension comprising a calcium carbonate-comprising material against microbial growth, especially against the growth of bacteria and/or yeast and/or mould. Especially, by the process according to the present invention the aqueous suspension or slurries have not to be subjected to a heating step in order to avoid the microbial growth and, therefore, no time or energy-consuming heating step has to be present in the process of the present invention.

### Characterization of step d): mixing the aqueous suspension obtained in step c)

In step d) the aqueous suspension obtained in step c) is mixed.

The skilled man will adapt the mixing conditions (such as the configuration of mixing pallets and mixing speed) according to his process equipment.

For example, the mixing may take place by means of a ploughshare mixer. Ploughshare mixers function by the principle of a fluidized bed produced mechanically. Ploughshare blades rotate close to the inside wall of a horizontal cylindrical drum and convey the components of the mixture out of the product bed and into the open mixing space. The fluidized bed produced mechanically ensures intense mixing of even large batches in a very short time. Choppers and/or dispersers are used to disperse lumps in a dry operation. Equipment that may be used in the inventive process is available, for example, from Gebrüder Lödige Maschinenbau GmbH, Germany or from VISCO JET Rührsysteme GmbH, Germany or from MTI Mischtechnik International GmbH, Germany.

### Aqueous preparation obtainable by the inventive process

According to one aspect of the present invention, an aqueous preparation obtainable by a process according to the present invention is provided.

According to another embodiment, an aqueous preparation is obtained by a process comprising the steps of
a) providing at least one calcium carbonate-comprising material,
b) providing urea as antimicrobial additive,
c) contacting the at least one calcium carbonate-comprising material of step a) with the at least one antimicrobial additive of step b) to provide an aqueous suspension,
wherein the aqueous suspension comprises from from 5 to 85 wt.-%, based on the total weight of the suspension, of at least one calcium carbonate-comprising material and has a pH of between 7.0 and 14, and
wherein the aqueous suspension comprises the antimicrobial additive in an amount of at least 1.2 wt.-% based on the total weight of the suspension and wherein the weight ratio of urea : water in the aqueous suspension is from 1:100 to 50:100.

According to another embodiment an aqueous preparation is provided comprising urea as antimicrobial additive and from 5 to 85 wt.-%, based on the total weight of the suspension, of at least one calcium carbonate-comprising material and having a pH of between 7.0 and 14, wherein the antimicrobial additive is present in the suspension in an amount of at least 1.2 wt.-%, based on the total weight of the aqueous suspension and wherein the weight ratio of urea : water in the aqueous suspension is from 1:100 to 50:100.

The inventors surprisingly found that an aqueous preparation according to the present invention is preserved against microbial growth, especially, especially against the growth of bacteria and/or yeast and/or mould. According to a preferred embodiment of the present invention, the aqueous preparations of the present invention merely comprise urea as antimicrobial additive and no further antimicrobial agents.

Urea is a naturally occurring substance that is formed in the body of humans and animals more precisely, the liver forms it by combining two ammonia molecules (NH₃) with a carbon dioxide (CO₂) molecule in the urea cycle. Urea is non-toxic or hazardous. Therefore, the obtained aqueous preparations do not comprise toxic compounds and, therefore are safe and non-toxic for the environment and human health. Furthermore, the obtained aqueous preparations require the same or even less safety standards as required for known aqueous preparations comprising biocides.

According to another aspect of the present invention, an aqueous preparation obtainable by the inventive method is provided.

According to another aspect of the present invention, an aqueous preparation obtainable by the inventive method is provided, for use in agriculture as a plant booster and/or a mineral fertilizer for stimulation of a photosynthetic process in plants, stimulation of plant growth, reinforcement of resistance to plant diseases, improvement of nutrient absorption and plant nutrition.

### Use of the aqueous preparation

According to one aspect of the present invention the aqueous preparation according to the present invention is used in agriculture as a plant booster and/or a mineral fertilizer for stimulation of a photosynthetic process in plants, stimulation of plant growth, reinforcement of resistance to plant diseases, improvement of nutrient absorption and plant nutrition.

Urea comprises nitrogen and, therefore, can be used in fertilizers as a source of nitrogen. Thus, the aqueous preparations of the present invention can be used in agriculture, for example as plant booster and, at the same time are preserved against the growth or formation of bacteria and/or yeast and/or mould.

### Method for preserving an aqueous suspension

According to another aspect of the present invention a method for preserving an aqueous suspension by urea as antimicrobial additive is provided, the aqueous suspension comprising from 5 to 85 wt.-%, based on the total weight of the suspension, of at least one calcium carbonate-comprising material and having a pH of between 7.0 and 14, characterized in that the method comprises the step of adding the antimicrobial additive to the suspension such that the amount of antimicrobial additive is at least 1.2 wt.-%, based on the total weight of the aqueous suspension and such that the weight ratio of urea : water in the aqueous suspension is from 1:100 to 50:100.

Advantageous aspects of the inventive method are defined below:
According to one aspect, the antimicrobial additive is added as a water based solution to the aqueous suspension comprising the calcium carbonate-comprising material, preferably in the form of a water based solution comprising from 20 to 75 wt.-%, more preferably from 30 to 72 wt.-%, even more preferably from 40 to 65 wt.-% and most preferably from 50 to 60 wt.-% of urea, based on the total weight of the water based solution.

According to another aspect, the antimicrobial additive is added as a dry material to the aqueous suspension comprising the calcium carbonate-comprising material.

According to another aspect, the antimicrobial additive is added to the suspension in an amount of 1.2 to 20 wt.-%, preferably in an amount of 1.5 to 15 wt.-%, more preferably in an amount of 2.0 to 10 wt.-%, and most preferably in an amount of 2.5 to 8.5 wt.-%, based on the total weight of the suspension.

According to another aspect, the calcium carbonate-comprising material comprises at least 50 wt.-%, preferably at least 80 wt.-%, and more preferably at least 97 wt.-% of calcium carbonate relative to the total dry weight of said calcium carbonate-comprising material.

According to another aspect, the aqueous suspension comprises from 10 to 84 wt.-%, preferably from 30 to 83 wt.-%, more preferably from 50 to 82 wt.-%, even more preferably from 60 to 80 wt.-% and most preferably from 68 to 78 wt.-%, based on the total weight of the suspension, of at least one calcium carbonate-comprising material.

According to another aspect, the calcium carbonate-comprising material is selected from the group consisting of ground calcium carbonate, preferably marble, limestone, dolomite and/or chalk, precipitated calcium carbonate, preferably vaterite, calcite and/or aragonite and surface-reacted calcium carbonate, wherein the surface-reacted calcium carbonate is a reaction product of natural ground or precipitated calcium carbonate with carbon dioxide and one or more H₃O⁺ ion donors in an aqueous medium, wherein the carbon dioxide is formed in situ by the H₃O⁺ ion donor treatment and/or is supplied from an external source and mixtures thereof, more preferably the at least one calcium carbonate-comprising material is ground calcium carbonate.

According to another aspect, the antimicrobial agent prevents or reduces the occurrence of at least one strain of bacteria and/or at least one strain of yeast and/or at least one strain of mould when present in the aqueous suspension.

According to another aspect,
(i) the at least one strain of bacteria is selected from the group comprising *Methylobacterium sp., Salmonella sp., Escherichia sp.* such as *Escherichia coli, Shigella sp., Enterobacter sp., Pseudomonas sp.* such as *Pseudomonas mendocina, Pseudomonas stutzeri, Pseudomonas aeruginosa,* and/or *Pseudomonas putida, Burkholderia sp.* such as *Burkholderia cepacia, Bdellovibrio sp., Agrobacterium sp., Alcaligenes sp.* such as *Alcaligenes faecalis, Flavobacterium sp., Ochrobactrum sp. such as Ochrobactrum tritici, Kocuria sp.* such as *Kocuria rhizophila, Rhizobium sp.* such as *Rhizobium radiobacter, Sphingobacterium sp., Sphingomonas sp., Aeromonas sp., Chromobacterium sp., Vibrio sp., Hyphomicrobium sp., Leptothrix sp., Micrococcus sp., Staphylococcus sp.* such as *Staphylococcus aureus, Agromyces sp., Acidovorax sp., Comamonas sp.* such as *Comomonas aquatic, Brevundimonas sp.* such as *Brevundimonas intermedia* and *Brevundimonas diminiuta, Spingobium sp.* such as *Spingobium yanoikuyae, Thauera sp.* such as *Thauera mechernichensis, Caldimonas sp., Hdrogenophaga sp., Teipidomonas sp.,* and mixtures thereof, and mixtures thereof, and/or
(ii) the at least one strain of yeast is selected from the group comprising *Saccharomycotina, Taphrinomycotina, Schizosaccharomycetes, Basidiomycota, Agaricomycotina, Tremellomycetes, Pucciniomycotina, Microbotryomycetes, Candida sp.* such as *Candida albicans, Candida tropicalis, Candida stellatoidea, Candida glabrata, Candida krusei, Candida guilliermondii, Candida viswanathii, Candida lusitaniae* and mixtures thereof, *Yarrowia sp.* such as *Yarrowia lipolytica, Cryptococcus* sp. such as *Cryptococcus gattii* and *Cryptococcus neofarmans, Zygosaccharomyces sp., Rhodotorula sp.* such as *Rhodotorula mucilaginosa, Saccharomyces sp.* such as *Saccharomyces cerevisiae, Pichia sp.* such as *Pichia membranifaciens* and mixtures thereof, and/or
(iii) the at least one strain of mould is selected from the group comprising of *Acremonium sp., Alternaria sp., Aspergillus sp., Cladosporium sp., Fusarium sp., Mucor sp., Penicillium sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

According to another aspect, the pH of the aqueous suspension is between 7.5 and 12, preferably between 8.2 and 10.0 and most preferably between 8.5 and 9.5.

According to another aspect, no further antimicrobial additives apart from urea are added to the aqueous suspension.

According to another aspect, the weight ratio of urea : water in the aqueous suspension is from 5:100 to 40:100 and preferably from 9:100 to 30:100.

The scope and interest of the present invention will be better understood based on the following examples which are intended to illustrate certain embodiments of the present invention and are non-limitative.

### Examples

### 1. Measurement methods

In the following, measurement methods implemented in the examples are described.

### BET specific surface area of a material

Throughout the present document, the specific surface area (in m²/g) of a material is determined using the BET method (using nitrogen as adsorbing gas), which is well known to the skilled man (ISO 9277:2010). The total surface area (in m²) of the mineral filler is then obtained by multiplication of the specific surface area and the mass (in g) of the mineral filler prior to treatment.

### Particle size distribution (mass % particles with a diameter < X) and weight median diameter (d₅₀) of a particulate material

Weight median grain diameter and grain diameter mass distribution of a particulate material were determined via the sedimentation process, i.e. an analysis of sedimentation behaviour in a gravitational field. The measurement was made with a Sedigraph™ 5100 of Micromeritics Instrument Corporation.

The volume-based median particle diameter of the surface-reacted calcium carbonate was determined by using a Malvern Mastersizer 2000.

The method and the instrument are known to the skilled person and are commonly used to determine grain size of fillers and pigments. The measurement is carried out in an aqueous solution of 0.1 wt% Na₄P₂O₇. The samples are dispersed using a high speed stirrer and supersonics.

### Solids content

The solids content (also known as "dry weight") was determined using a Moisture

Analyser MJ33 from the company Mettler-Toledo, Switzerland, with the following settings: temperature of 120°C, automatic switch off 3, standard drying, 5 to 20 g of product.

### pH measurement

The pH of a suspension is measured at 25°C using a Mettler Toledo Seven Easy pH meter and a Mettler Toledo InLab® Expert Pro pH electrode. A three point calibration (according to the segment method) of the instrument is first made using commercially available buffer solutions having pH values of 4, 7 and 10 at 20°C (from Aldrich). The reported pH values are the endpoint values detected by the instrument (the endpoint is when the measured signal differs by less than 0.1 mV from the average over the last 6 s).

### Brookfield-viscosity

The Brookfield viscosity is measured by a Brookfield DV-III Ultra viscometer at 20°C ± 3°C at 100 rpm using an LV-3 spindle and is specified in mPa·s. Once the spindle has been inserted into the sample, the measurement is started with a constant rotating speed of 100 rpm. The reported Brookfield viscosity values are the values displayed 60 seconds after the start of the measurement.

### Total viable bacterial counts

All quoted bacterial counts (Total viable counts (TVC) values), unless otherwise indicated, are given in cfu/ml and determined after at least 2 days following plate-out and incubation at 30°C and in accordance with the counting method described in "Bestimmung von aerobe mesophilen Keimen", Schweizerisches Lebensmittelbuch, chapter 56, section 7.01, edition of 1985, revised version of 1988.

Unless otherwise stated, per tryptic soy agar plate (TSA, prepared using BD 236950) 0.1 ml of a solution or suspension is plated. Counts from 10 000 cfu/ml to 99 999 cfu/ml are reported as >1E4 cfu/ml. Counts from 100 000 cfu/ml to 999 999 cfu/ml are reported as >1E5 cfu/ml. Counts above 1 000 000 cfu/ml are reported as >1E6 cfu/ml.

To identify the bacteria present in concentrated urea solutions (>25% w/w urea), 3 ml urea solution is diluted in sterile 12 ml 0.9%(w/w) NaCl solution. The mixture is then centrifuged (10 min at 400 g) and the supernatant is removed until 0.1 ml supernatant remains with the pellet. The pellet is resuspended in the remaining supernatant and the TVC is determined of 0.1 ml as described above. The bacterial counts are given as cfu/3 ml.

### 1. Examples

### Preparation of calcium carbonate-comprising material suspensions

An aqueous slurry of calcium carbonate-comprising material (Italian marble; *d*₅₀ = 10 µm; 21% < 2 µm, calcium carbonate content ≥97.5 wt.-%) is prepared at 75 wt.-% solid content, based on the total weight of the slurry. The slurry is wet ground at 95°C using 0.6 wt.-% in respect to dry solids material of a sodium / calcium neutralized polyacrylate grinding agent (Mw 6 000) in a 200 1 vertical ball mill to the following final particle size distribution.

H60 refers to slurries with the characteristics of particle size distribution of dso = 1.4 - 1.6 µm; 58.8 - 61.5 wt.-% < 2 µm; 37 - 40.3 wt.-% < 1 µm, 8.2 - 12.4 wt.-% < 0.2 µm, a Brookfield viscosity of 100-150 mPa·s, a pH of 8.5-9.0 and solid contents of ≥75 wt.-%, based on the total weight of the slurry.

H90 refers to slurries with the characteristics of particle size distribution of *d*₅₀ = 0.67 µm; 89.9 wt.-% < 2 µm; 63.3 wt.-% < 1 µm, 21.2 wt.-% < 0.2 µm, a Brookfield viscosity of 100-150 mPa·s, a pH of 8.5-9.0 and solid contents of ≥75 wt.-%, based on the total weight of the slurry.

Sterile slurries of H60 and H90 are prepared by autoclaving under steam pressure 1 kg slurry aliquots in containments of 21 for 15 minutes at 121°C.

### Preparation of preserved calcium carbonate-comprising material suspensions

Calcium carbonate-comprising material slurries containing urea are prepared by combining the above slurries (H60 or H90) either with dry urea (Sigma-Aldrich 15604) or concentrated urea solutions (≥50 wt.-%) and/or water.

The urea solutions are either prepared using dry urea and deionized water or using industrial grade 50 wt.-% urea solution, based on the total weight of the urea solution as supplied by Vendor (Yara Canda Inc.).

The resulting urea contents, water contents and calcium carbonate contents are calculated from the measured amounts of water, urea and/or slurries combined using the measured solid content of the calcium carbonate slurry. For calculations the solid content of the slurries is considered to consist of 100% calcium carbonate.

### Preparation of Inoculum

Non-sterile slurries (H60 or H90) contain contamination with environmental bacteria at a TVC >100 000 cfu/ml. The contamination originates spontaneously and a bacterial burden of at least >100 000 cfu/ml is confirmed prior use as inoculum by TVC. The following bacterial species are known to occur, as identified by 16S RNA sequencing or MALDI-TOF-MS analysis: *Rhizobium radiobacter, Brevundimonas intermedia, Brevundimonas diminiuta, Sphingomonas sp., Pseudomonas stutzeri, Pseudomonas sp., Comomonas aquatic.*

For the preparation of inoculum with a single bacterial species (for example *Escherichia coli* (DSMZ 46295) or *Pseudomonas putida*), bacteria are spread onto Tryptic soy broth agar (BD, 236950) by dilution streaking followed by incubation at 30°C for at least 24 h until colonies appear. Overnight cultures are generated by inoculation of 3ml Tryptic soy broth (Fluka 22092) with a single colony followed incubation with agitation at rotations per minute (rpm) at 30°C for 24 h.

### Example 1

50g sterile slurry H90 with a solid content of 75 wt.-%, based on the total weight of the H90 slurry is supplemented with different concentrations of dry urea. The samples are then stored for 3 days at 30°C. After the storage, the samples are inoculated with 1 ml non-sterile calcium carbonate slurry (H90), incubated for 3 days at 30°C and the TVC is determined. Samples are further inoculated with 1 ml non-sterile calcium carbonate slurry (H90). Up to three inoculations are performed.

**Table 1: Preservation efficacy of slurries with different urea contents.**

| urea content¹ | calcium carbonate content¹ | water content¹ | TVC cfu/ml 1^{st} Inoculation | TVC cfu/ml 2^{nd} Inoculation | TVC cfu/ml 3^{rd} Inoculation |
|---|---|---|---|---|---|
| 0 % | 75% | 25% | >1E6 | >1E6 | >1E6 |
| 0.025% | 75% | 25% | >1E6 | >1E6 | >1E6 |
| 0.05% | 75% | 25% | >1E6 | >1E6 | >1E6 |
| 0.075% | 75% | 25% | >1E6 | >1E6 | >1E6 |

| | | | | | |
|---|---|---|---|---|---|
| ¹ Calculated per total slurry as w/w. | | | | | |

As can be seen from table 1 urea is not able to preserve calcium carbonate slurries from bacterial growth at low urea concentrations.

### Example 2

50 g sterile slurry H60 with a solid content of 76.5 wt.-%, based on the total weight of the H60 slurry is supplemented with different amounts of 61 wt.-% urea solution or water. The samples are then inoculated with 1 ml non-sterile calcium carbonate slurry (H60), 1 ml non-sterile calcium carbonate slurry (H90), 0.02 ml overnight culture of *Escherichia coli* (DSMZ 46295) and 0.02 ml overnight culture of *Pseudomonas putida.* The control samples are not inoculated. Samples are incubated at 30°C and the TVC and pH are determined at various time points (0 day, 1 day, 4, days, 8 days, 9 days and/or 13 days).

**Table 2: Preservation efficacy of slurries with different urea contents. Detection limit 100 cfu/ml.**

| Urea content¹ | calcium carbonate content¹ | Water content¹ | Inoculum | TVC cfu/ml Day 0 | TVC cfu/ml Day 1 | TVC cfu/ml Day 4 | TVC cfu/ml Day 8 | TVC cfu/ml Day 13 | pH Day 8 |
|---|---|---|---|---|---|---|---|---|---|
| 0% | 73.6% | 26.4% | none | <100 | <100 | <100 | <100 | >1E5 | 9.06 |
| 2.75% | 73.1% | 24.15% | none | nd | <100 | <100 | <100 | <100 | 9.16 |
| 7.6% | 67.1% | 25.3% | none | nd | <100 | <100 | <100 | <100 | 9.25 |
| 0% | 73.6% | 26.4% | *E. coli* | >1E5 | >1E5 | >1E5 | >1E5 | >1E5 | nd |
| 2.75% | 73.1% | 24.15% | *E. coli* | nd | <100 | <100 | 500 | <100 | nd |
| 7.6% | 67.1% | 25.3% | *E. coli* | nd | <100 | <100 | <100 | 100 | nd |
| 0% | 73.6% | 26.4% | *P. putida* | >1E5 | >1E5 | >1E5 | >1E5 | >1E5 | nd |
| 2.75% | 73.1% | 24.15% | *P. putida* | nd | <100 | <100 | 100 | <100 | nd |
| 7.6% | 67.1% | 25.3% | *P. putida* | nd | <100 | <100 | <100 | <100 | nd |
| 0% | 73.6% | 26.4% | H60 | >1E5 | >1E5 | >1E5 | >1E5 | >1E5 | nd |
| 2.75% | 73.1% | 24.15% | H60 | nd | 4'400 | <100 | <100 | <100 | nd |
| 7.6% | 67.1% | 25.3% | H60 | nd | <100 | <100 | <100 | <100 | nd |
| 0% | 73.6% | 26.4% | H90 | >1E5 | >1E5 | >1E5 | >1E5 | >1E5 | nd |
| 2.75% | 73.1% | 24.15% | H90 | nd | <100 | <100 | <100 | <100 | nd |
| 7.6% | 67.1% | 25.3% | H90 | nd | <100 | <100 | <100 | <100 | nd |

| | | | | | | | | | |
|---|---|---|---|---|---|---|---|---|---|
| ¹ Calculated per total slurry as w/w.; nd: not determined | | | | | | | | | |

**Table 3: Preservation efficacy of slurries with different urea contents. Detection limit 100 cfu/ml.**

| Urea content ¹ | calcium carbonate content¹ | Water content¹ | Inoculum | TVC cfu/ml | TVC cfu/ml | TVC cfu/ml | TVC cfu/ml | pH |
|---|---|---|---|---|---|---|---|---|
| | | | | Day 0 | Day 1 | Day 4 | Day 9 | Day 4 |
| 0% | 76.5% | 23.5% | none | <100 | <100 | <100 | >1E5 | 8.94 |
| 0.65% | 75.7% | 23.65% | none | nd | <100 | <100 | nd | 9.06 |
| 1.28% | 74.9% | 23.82% | none | nd | <100 | <100 | nd | 9.05 |
| 2.75% | 73.1% | 24.15% | none | nd | <100 | <100 | <100 | 9.11 |
| 0 % | 76.5% | 23.5% | *E. coli* | >1E5 | >1E5 | >1E5 | >1E5 | nd |
| 0.65% | 75.7% | 23.65% | *E. coli* | nd | >1E5 | >1E5 | nd | nd |
| 1.28% | 74.9% | 23.82% | *E. coli* | nd | <100 | <100 | nd | nd |
| 2.75% | 73.1% | 24.15% | *E. coli* | nd | <100 | <100 | <100 | nd |
| 0 % | 76.5% | 23.5% | *P. putida* | >1E5 | >1E5 | >1E5 | >1E5 | nd |
| 0.65% | 75.7% | 23.65% | *P. putida* | nd | >1E5 | >1E5 | nd | nd |
| 2.75% | 73.1% | 24.15% | *P. putida* | nd | <100 | <100 | <100 | nd |
| 0 % | 76.5% | 23.5% | H60 | >1E5 | >1E5 | >1E5 | >1E5 | nd |
| 0.65% | 75.7% | 23.65% | H60 | nd | >1E5 | >1E5 | nd | nd |
| 2.75% | 73.1% | 24.15% | H60 | nd | 3'500 | 100 | <100 | nd |
| 0 % | 76.5% | 23.5% | H90 | >1E4 | >1E5 | >1E5 | >1E5 | nd |
| 0.65% | 75.7% | 23.65% | H90 | nd | >1E5 | >1E5 | nd | nd |
| 2.75% | 73.1% | 24.15% | H90 | nd | <100 | <100 | <100 | nd |

| | | | | | | | | |
|---|---|---|---|---|---|---|---|---|
| ¹ Calculated per total Slurry as w/w. nd: not determined | | | | | | | | |

As can be seen from tables 2 and 3 urea is able to preserve calcium carbonate slurries from bacterial growth over at least 13 days when present at high urea concentrations.

### Example 3

50 g sterile calcium carbonate slurry (H60) with a solid content of 77.3 wt.-%, based on the total weight of the H60 slurry is supplemented with industrial grade 50% (w/w) urea solution (Yara Canda Inc.) or water to different final concentrations. The industrial grade contained natural resident (i.e. bacteria in a non-growing state) bacteria. The bacterial of the industrial urea burden is 5 cfu/3 ml as determined by TVC. The species are identified by characterizing the grown colonies from the TVC by 16 S RNA sequencing, known to the person skilled in the art.

The species identified are Sporosarcina koreensis, (Gram positive, urease positive, spore forming), Paenibacillus sp., (Gram positive, urease positive, spore forming) and Halobacillus trueperi (Gram positive, urease negative, spore forming).

The samples are further artificially inoculated with 1 ml non-sterile calcium carbonate slurry (H60), 1 ml non-sterile calcium carbonate slurry (H90), 0.02 ml overnight culture of *Escherichia coli* (DSMZ 46295) and 0.02 ml overnight culture *Pseudomonas putida.* The control sample are not inoculated. Samples are incubated at 30°C and the TVC and pH are determined at various time points (0 day, 1 day, 4, days, 8 days, 11 days and 15 days).

**Table 4: Preservation efficacy of slurries with different urea contents using industrial grade urea, containing urease positive bacteria. Detection limit 100 cfu/ml.**

| Urea content ¹ | calcium carbonate content¹ | Water content¹ | Inoculum | TVC cfu/ml Day 0 | TVC cfu/ml Day 1 | TVC cfu/ml Day 4 | TVC cfu/ml Day 8 | TVC cfu/ml Day 11 | TVC cfu/ml Day 13 | pH Day 16 |
|---|---|---|---|---|---|---|---|---|---|---|
| 0% | 73% | 27% | none | <100 | <100 | <100 | <100 | <100 | <100 | 8.97 |
| 5.5% | 69% | 25.5% | none | nd | <100 | <100 | 100 | <100 | <100 | 9.02 |
| 0% | 73% | 27% | *E. coli* | >1E5 | >1E5 | >1E5 | >1E5 | >1E5 | >1E5 | 8.52 |
| 5.5% | 69% | 25.5% | *E. coli* | nd | <100 | <100 | <100 | <100 | <100 | 9.02 |
| 0% | 73% | 27% | *P. putida* | >1E5 | >1E5 | >1E5 | >1E5 | >1E5 | >1E5 | 8.5 |
| 5.5% | 69% | 25.5% | *P. putida* | nd | <100 | <100 | <100 | <100 | <100 | 9.04 |
| 0% | 73% | 27% | H60 | >1E5 | >1E5 | >1E5 | >1E5 | >1E5 | >1E5 | 8.09 |
| 5.5% | 69% | 25.5% | H60 | nd | 1'800 | <100 | <100 | <100 | <100 | 9.00 |
| 0 % | 73% | 27% | H90 | >1E5 | >1E5 | >1E5 | >1E5 | >1E5 | >1E5 | 8.11 |
| 5.5% | 69% | 25.5% | H90 | nd | >1E4 | 300 | <100 | <100 | <100 | 8.97 |

| | | | | | | | | | | |
|---|---|---|---|---|---|---|---|---|---|---|
| ¹ Calculated per total Slurry as w/w. nd: not determined | | | | | | | | | | |

### Example 4

50 g sterile calcium carbonate slurry (H60) with a solid content of 78.3 wt.-%, based on the total weight of the H60 slurry are supplemented with 61% (w/w) urea solution to different final concentrations. The samples are inoculated with 1 ml non-sterile calcium carbonate slurry (H60). Samples are incubated at 30°C and TVC and pH are determined at various time points (0 day, 1 day, 4, days, 11 days).

**Table 5: Preservation efficacy of slurries with different Urea contents. Detection limit 100 cfu/ml.**

| Urea content ¹ | calcium carbonate content¹ | Water content¹ | Inoculum | TVC cfu/ml Day 0 | TVC cfu/ml Day 1 | TVC cfu/ml Day 4 | TVC cfu/ml Day 11 | pH Day 11 |
|---|---|---|---|---|---|---|---|---|
| 0.00% | 75.80% | 24.20% | H60 | >1E5 | >1E5 | >1E5 | >1E5 | 8.55 |
| 0.40% | 75.61% | 23.99% | H60 | nd | >1E5 | >1E5 | >1E5 | 9.05 |
| 1.10% | 75.48% | 23.42% | H60 | nd | >1E5 | >1E5 | >1E5 | 9.25 |
| 2.80% | 75.21% | 21.98% | H60 | nd | >1E4 | 600 | <100 | 9.10 |

| | | | | | | | | |
|---|---|---|---|---|---|---|---|---|
| ¹ Calculated per total Slurry as w/w. nd: not determined | | | | | | | | |

### Example 5

1 kg calcium carbonate slurry (H60) with a solid content of 75 wt.-%, based on the total weight of the H60 slurry is stirred at approximately 500 rotations per minute (rpm) and 27.5 g dry urea is added slowly during agitation, leading to 2.68 wt.-% urea and 73 wt.-% calcium carbonate, based on the total weight of the obtained slurry. The blend is further mixed for 30 minutes at slow speed (<500 rpm).

The addition of dry urea does not give any negative impact on the product. No clumps were formed, and the viscosity does not increase. The product remains stable for 7 days at room temperature and 40°C.

## Claims

1. Use of urea as an antimicrobial additive in an aqueous suspension, comprising from 5 to 85 wt.-%, based on the total weight of the suspension, of at least one calcium carbonate-comprising material and having a pH of between 7.0 and 14, wherein the antimicrobial additive is present in the suspension in an amount of at least 1.2 wt.-%, based on the total weight of the aqueous suspension and wherein the weight ratio of urea : water in the aqueous suspension is from 1:100 to 50:100.

2. Use according to claim 1, wherein the antimicrobial additive is added as a water based solution to the aqueous suspension comprising the calcium carbonate-comprising material, preferably in the form of a water based solution comprising from 20 to 75 wt.-%, more preferably from 30 to 72 wt.-%, even more preferably from 40 to 65 wt.-% and most preferably from 50 to 60 wt.-% of urea, based on the total weight of the water based solution.

3. Use according to claim 1, wherein the antimicrobial additive is added as a dry material to the aqueous suspension comprising the calcium carbonate-comprising material.

4. Use according to any one of the preceding claims, wherein the antimicrobial additive is added to the suspension in an amount of 1.2 to 20 wt.-%, preferably in an amount of 1.5 to 15 wt.-%, more preferably in an amount of 2.0 to 10 wt.-%, and most preferably in an amount of 2.5 to 8.5 wt.-%, based on the total weight of the suspension.

5. Use according to any one of the preceding claims, wherein the calcium carbonate-comprising material comprises at least 50 wt.-%, preferably at least 80 wt.-%, and more preferably at least 97 wt.-% of calcium carbonate relative to the total dry weight of said calcium carbonate-comprising material.

6. Use according to any one of the preceding claims, wherein the aqueous suspension comprises from 10 to 84 wt.-%, preferably from 30 to 83 wt.-%, more preferably from 50 to 82 wt.-%, even more preferably from 60 to 80 wt.-% and most preferably from 68 to 78 wt.-%, based on the total weight of the suspension, of at least one calcium carbonate-comprising material.

7. Use according to any one of the preceding claims, wherein the calcium carbonate-comprising material is selected from the group consisting of ground calcium carbonate, preferably marble, limestone, dolomite and/or chalk, precipitated calcium carbonate, preferably vaterite, calcite and/or aragonite and surface-reacted calcium carbonate, wherein the surface-reacted calcium carbonate is a reaction product of natural ground or precipitated calcium carbonate with carbon dioxide and one or more H₃O⁺ ion donors in an aqueous medium, wherein the carbon dioxide is formed in situ by the H₃O⁺ ion donor treatment and/or is supplied from an external source and mixtures thereof, more preferably the at least one calcium carbonate-comprising material is ground calcium carbonate.

8. Use according to any one of the preceding claims, wherein the antimicrobial agent prevents or reduces the occurrence of at least one strain of bacteria and/or at least one strain of yeast and/or at least one strain of mould when present in the aqueous suspension.

9. Use according to claim 8, wherein
(i) the at least one strain of bacteria is selected from the group comprising *Methylobacterium sp., Salmonella sp., Escherichia sp.* such as *Escherichia coli, Shigella sp., Enterobacter sp., Pseudomonas sp.* such as *Pseudomonas mendocina, Pseudomonas stutzeri, Pseudomonas aeruginosa,* and/or *Pseudomonas putida, Burkholderia sp.* such as *Burkholderia cepacia, Bdellovibrio sp., Agrobacterium sp., Alcaligenes sp.* such as *Alcaligenes faecalis, Flavobacterium sp., Ochrobactrum sp. such as Ochrobactrum tritici, Kocuria sp.* such as *Kocuria rhizophila, Rhizobium sp.* such as *Rhizobium radiobacter, Sphingobacterium sp., Sphingomonas sp., Aeromonas sp., Chromobacterium sp., Vibrio sp., Hyphomicrobium sp., Leptothrix sp., Micrococcus sp., Staphylococcus sp.* such as *Staphylococcus aureus, Agromyces sp., Acidovorax sp., Comamonas sp.* such as *Comomonas aquatic, Brevundimonas sp.* such as *Brevundimonas intermedia* and *Brevundimonas diminiuta, Spingobium sp.* such as *Spingobium yanoikuyae, Thauera sp.* such as *Thauera mechernichensis, Caldimonas sp., Hdrogenophaga sp., Teipidomonas sp.,* and mixtures thereof, and mixtures thereof, and/or
(ii) the at least one strain of yeast is selected from the group comprising *Saccharomycotina, Taphrinomycotina, Schizosaccharomycetes, Basidiomycota, Agaricomycotina, Tremellomycetes, Pucciniomycotina, Microbotryomycetes, Candida sp.* such as *Candida albicans, Candida tropicalis, Candida stellatoidea, Candida glabrata, Candida krusei, Candida guilliermondii, Candida viswanathii, Candida lusitaniae* and mixtures thereof, *Yarrowia sp.* such as *Yarrowia lipolytica, Cryptococcus* sp. such as *Cryptococcus gattii* and *Cryptococcus neofarmans, Zygosaccharomyces sp., Rhodotorula sp.* such as *Rhodotorula mucilaginosa, Saccharomyces sp.* such as *Saccharomyces cerevisiae, Pichia sp.* such as *Pichia membranifaciens* and mixtures thereof, and/or
(iii) the at least one strain of mould is selected from the group comprising of *Acremonium sp., Alternaria sp., Aspergillus sp., Cladosporium sp., Fusarium sp., Mucor sp., Penicillium sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

10. Use according to any one of the preceding claims, wherein the pH of the aqueous suspension is between 7.5 and 12, preferably between 8.2 and 10.0 and most preferably between 8.5 and 9.5.

11. Use according to any one of the preceding claims, wherein no further antimicrobial additives apart from urea are added to the aqueous suspension.

12. Use according to any one of the preceding claims, wherein the weight ratio of urea : water in the aqueous suspension is from 5:100 to 40:100 and preferably from 9:100 to 30:100.

13. Process for preserving an aqueous suspension against microbial growth, the process comprising the steps of:
a) providing at least one calcium carbonate-comprising material,
b) providing urea as antimicrobial additive,
c) contacting the at least one calcium carbonate-comprising material of step a) with the at least one antimicrobial additive of step b) to provide an aqueous suspension,
wherein the aqueous suspension comprises from from 5 to 85 wt.-%, based on the total weight of the suspension, of at least one calcium carbonate-comprising material and has a pH of between 7.0 and 14, and
wherein the aqueous suspension comprises the antimicrobial additive in an amount of at least 1.2 wt.-% based on the total weight of the suspension and wherein the weight ratio of urea : water in the aqueous suspension is from 1:100 to 50:100.

14. Process according to claim 13, wherein the calcium carbonate-comprising material is selected from the group consisting of ground calcium carbonate, preferably marble, limestone, dolomite and/or chalk, precipitated calcium carbonate, preferably vaterite, calcite and/or aragonite and surface-reacted calcium carbonate, wherein the surface-reacted calcium carbonate is a reaction product of natural ground or precipitated calcium carbonate with carbon dioxide and one or more H₃O⁺ ion donors in an aqueous medium, wherein the carbon dioxide is formed in situ by the H₃O⁺ ion donor treatment and/or is supplied from an external source and mixtures thereof, more preferably the at least one calcium carbonate-comprising material is surface-reacted calcium carbonate.

15. Aqueous preparation obtainable by the process of any of claims 13 or 14.

16. Use of the aqueous preparation according to claim 15 in agriculture as a plant booster and/or a mineral fertilizer for stimulation of a photosynthetic process in plants, stimulation of plant growth, reinforcement of resistance to plant diseases, improvement of nutrient absorption and plant nutrition.
